# EUROPEAN PATENT APPLICATION

(11) **EP 4 234 804 A1**
(43) Date of publication of application: **30.08.2023**
(21) Application number: 21882477.9
(22) Date of filing: 13.09.2021
(51) Int. Cl.: D06M 15/693, D03D 1/00, D03D 3/04, D03D 11/00, D03D 15/533, D04H 3/16, D06M 15/263, D06M 23/16

(54) **TEXTILE FOR NON-WOVEN FABRIC, AND CONVEYING BELT**

(30) Priority: 23.10.2020 JP 2020178233; 05.02.2021 JP 2021017205
(71) Applicant: Nippon Filcon Co., Ltd., Inagi-shi Tokyo 206-8577 (JP)
(72) Inventor: NOMURA, Yusuke, Fuij-shi Shizuoka 419-0201 (JP); SAITO, Toshiki, Fuij-shi Shizuoka 419-0201 (JP); WATANABE, Yoshifumi, Fuij-shi, Shizuoka 419-0201 (JP)
(74) Representative: Algemeen Octrooi- en Merkenbureau B.V.
(86) International application number: PCT/JP2021/033471
(87) International publication number: WO 2022/085336

(57) **Abstract**

In a textile for a non-woven fabric, the obverse surface side on which the non-woven fabric is conveyed is coated with a rubber resin classified into the R group of JISK6397 (rubber having an unsaturated carbon bond on the main chain).

## Description

### [TECHNICAL FIELD]

The present invention relates to textiles used for conveying non-woven fabrics.

### [BACKGROUND ART]

In the past, devices have been devised that feed a fiber aggregate on an endless mesh belt that is running and then convey the fiber aggregate so as to form non-woven fabrics. In recent years, with an increase in the conveying speed, one of the performance requirements for mesh belts is the gripping property that ensures stable conveyance of a fiber aggregate fed on a mesh belt (the fiber aggregate does not come off the belt or shift during the conveyance).

For example, in order to add an excellent sheet support property (gripping property), a bilayer fabric for non-woven fabric has been devised that includes: a front surface layer, which is formed of surface warps and surface wefts, and a rear layer, which is formed of rear warps and rear wefts and that comprises: a first warp pair in which a surface connecting warp functioning as a connection yarn and a rear connecting warp functioning as a connection yarn are disposed in substantially vertical direction; a second warp pair in which the surface warp and the rear warp are stacked in a vertical direction; and a third warp pair in which two surface warps are adjacently placed (see Patent Literature 1).

[Patent Literature 1] Japanese Patent Application Publication No. 2017-197883

### [SUMMARY OF INVENTION]

### [TECHNICAL PROBLEM]

However, as the conveying speed is further increased, there is a demand for further improvement in the gripping property.

In this background, one of exemplary purposes of the present invention is to provide a new technique for further improving the gripping property of a belt suitable for conveying non-woven fabrics.

### [SOLUTION TO PROBLEM]

In order to solve the above-mentioned problems, in a textile for a non-woven fabric, the obverse surface side on which the non-woven fabric is conveyed is coated with a rubber resin classified into the R group of JISK6397 (rubber having an unsaturated carbon bond on the main chain).

According to this aspect, the gripping property of the belt can be improved.

The rubber resin may be styrene butadiene rubber.

The other aspect of the present invention also relates to a textile for a non-woven fabric. In this textile for a non-woven fabric, the obverse surface side on which the non-woven fabric is conveyed is coated with a rubber resin classified into the M group of JISK6397 (polymethylene type rubber with a saturated main chain).

According to this aspect, the gripping property of the belt can be improved.

The rubber resin may be acrylic rubber.

The rubber resin may be water soluble before curing. As long as the rubber resin is water-soluble before curing, this allows for a reduction in the adverse effects on the environment and human health even when the solvent volatilizes during the curing.

The static friction coefficient on the obverse surface side may be in the range of 0.25 to 0.90. This allows the gripping property of the belt to be improved. If the static friction coefficient is 0.90 or less, the nonwoven web during production spreads sufficiently on the belt, and the uniformity of the web is not compromised. If the static friction coefficient is 0.25 or higher, sufficient gripping force on the non-woven web can be obtained.

Another aspect of the present invention also relates to a textile for a non-woven fabric. In this textile for a non-woven fabric, the obverse surface side on which a non-woven fabric is conveyed is coated with a resin different from the material of the yarns that constitute the textile, and the static friction coefficient on the obverse surface side is in the range of 0.25 to 0.90.

According to this aspect, if the static friction coefficient is 0.90 or less, the non-woven web during production spreads sufficiently on the belt, and the uniformity of the web is not compromised. If the static friction coefficient is 0.25 or higher, sufficient gripping force on the non-woven web can be obtained. Therefore, the gripping property of the belt can be improved.

Cotton may be pressed against a multilayer textile for a non-woven fabric whose obverse surface side on which the non-woven fabric is conveyed is tilted in the vertical direction, and the time between the release of the hand and the fall of the cotton may be ten seconds or less. This makes it easier for the non-woven fabric to be released from the belt conveying the non-woven fabric.

The difference between the height of a warp knuckle formed by a warp and the height of a weft knuckle formed by a weft on the obverse surface side on which the non-woven fabric is conveyed may be 100 um or more. This allows the frictional resistance between the obverse surface side of the textile for a non-woven fabric and the non-woven fabric to be increased.

Conductive yarns may be interwoven.

The resin may have a durometer hardness of 10 to 80 after the curing. This allows the gripping property of the belt to be improved.

Yet another aspect of the present invention also relates to a textile for a non-woven fabric. This textile for a non-woven fabric is coated with a resin having a durometer hardness of 10 to 80 after curing on the obverse surface side on which the non-woven fabric is conveyed. Alternatively, the textile for a non-woven fabric may be coated with a resin having a durometer hardness of 50 to 80 after curing on the obverse surface side on which the nonwoven fabric is conveyed. Alternatively, the textile for a non-woven fabric may be coated with a resin having a durometer hardness of 10 to 20 after curing on the obverse surface side on which the non-woven fabric is conveyed.

According to this aspect, the gripping property of the belt can be improved.

Still another aspect of the present invention relates to a conveying belt. This belt is composed of the above-mentioned multilayer textile for a non-woven fabric.

Optional combinations of the aforementioned constituting elements, and implementations of the invention in the form of methods, apparatuses, and systems may also be practiced as additional modes of the present invention.

### [ADVANTAGEOUS EFFECTS OF INVENTION]

According to the present invention, a new textile for a non-woven fabric can be provided that forms a belt suitable for conveying non-woven fabrics can be provided.

### [BRIEF DESCRIPTION OF THE DRAWINGS]

FIG. 1 is a diagram showing a schematic configuration of a manufacturing device for manufacturing nonwoven fabrics by a spun-bonding method;
FIG. 2 is a schematic diagram showing the schematic configuration of a device for measuring the gripping property of a multilayer textile for a non-woven fabric on a non-woven fabric;
FIG. 3 is a schematic diagram showing the schematic configuration of a device for measuring the static frictional force of a multilayer textile for a non-woven fabric;
FIG. 4 is a schematic diagram for explaining a releasability evaluation test;
FIG. 5 is a design diagram showing a weave repeat of a multilayer textile for a non-woven fabric according to Exemplary Embodiment 1-1;
FIG. 6 is a cross-sectional view along each warp in the design diagram shown in FIG. 5;
FIG. 7 shows a graph comparing the frictional force value of multilayer textiles for non-woven fabrics according to Exemplary Embodiment 1-1 through Exemplary Embodiment 1-4 and the frictional force value of a multilayer textile for a non-woven fabric according to Comparative Example 1;
FIG. 8 is a design diagram showing a weave repeat of a multilayer textile for a non-woven fabric according to Exemplary Embodiment 2;
FIG. 9 is a cross-sectional view along each warp in the design diagram shown in FIG. 8;
FIG. 10 is a design diagram showing a weave repeat of a multilayer textile for a non-woven fabric according to Exemplary Embodiment 3;
FIG. 11 is a cross-sectional view along each warp in the design diagram shown in FIG. 10;
FIG. 12 is a design diagram showing a weave repeat of a multilayer textile for a non-woven fabric according to Exemplary Embodiment 4;
FIG. 13 is a cross-sectional view along each warp in the design diagram shown in FIG. 12;
FIG. 14 is a design diagram showing a weave repeat of a multilayer textile for a non-woven fabric according to Exemplary Embodiment 5;
FIG. 15 is a cross-sectional view along each warp in the design diagram shown in FIG. 14;
FIG. 16 is a design diagram showing a weave repeat of a multilayer textile for a non-woven fabric according to Exemplary Embodiment 6;
FIG. 17 is a cross-sectional view along each warp in the design diagram shown in FIG. 16;
FIG. 18 is a design diagram showing a weave repeat of a multilayer textile for a non-woven fabric according to Exemplary Embodiment 7;
FIG. 19 is a cross-sectional view along each warp in the design diagram shown in FIG. 18;
FIG. 20 is a diagram showing a graph of static friction coefficient measurement results;
FIG. 21 is a design diagram showing a weave repeat of a multilayer textile for a non-woven fabric according to Exemplary Embodiment 8;
FIG. 22 is a cross-sectional view along each warp in the design diagram shown in FIG. 21;
FIG. 23 is a design diagram showing a weave repeat of a multilayer textile for a non-woven fabric according to Exemplary Embodiment 9;
FIG. 24 is a cross-sectional view along each warp in the design diagram shown in FIG. 23;
FIG. 25 is a diagram showing a graph of other static friction coefficient measurement results;
FIG. 26 is a figure showing the results of a shower resistance test on multilayer textiles for non-woven fabrics of Exemplary Embodiment 1-1 through Exemplary Embodiment 1-4; and
FIG. 27 is a figure showing the results of an adhesion test on the multilayer textiles for non-woven fabrics according to Comparative Example 1 and Exemplary Embodiment 1-1 through Exemplary Embodiment 1-4.

### [DESCRIPTION OF EMBODIMENTS]

Hereinafter, the present invention will be explained based on embodiments with reference to the drawings. The same or equivalent constituting elements, members, and processes illustrated in each drawing shall be denoted by the same reference numerals, and duplicative explanations will be omitted appropriately. Further, the embodiments do not limit the invention and are shown for illustrative purposes, and not all the features described in the embodiments and combinations thereof are necessarily essential to the invention.

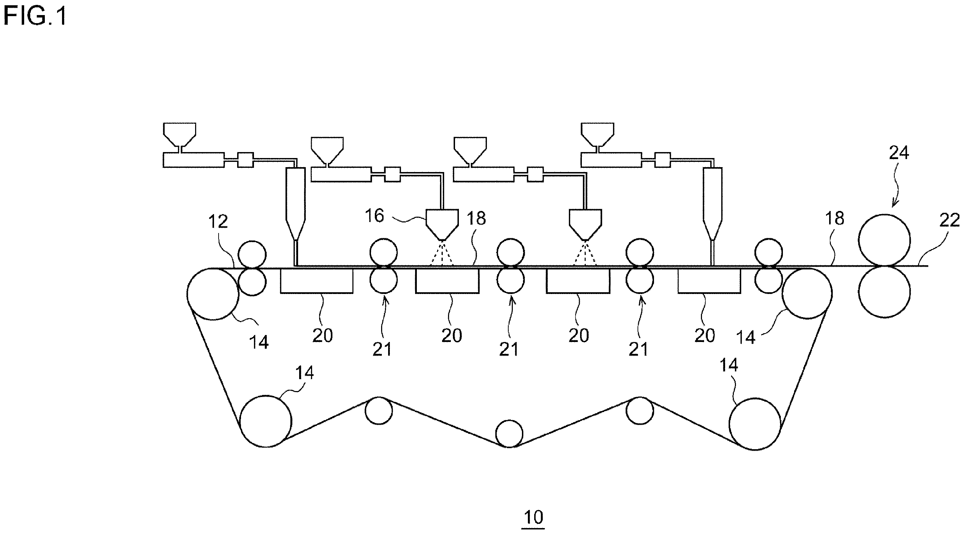

Conventionally, various methods have been devised as methods for manufacturing non-woven fabrics, such as a spun-bonding method and a melt blow method. For example, the spun-bonding method is a method for manufacturing nonwoven fabrics by stretching molten resin polymers and accumulating the stretched resin polymers on a non-woven fabric belt in the form of sheets. This spun-bonding method is particularly suitable for production at high speeds, and in recent years, a belts is used at a speed of around 1000 mm/min. Therefore, in the spun-bonding method, the gripping force of the belt is particularly required. FIG. 1 is a diagram showing a schematic configuration of a manufacturing device for manufacturing non-woven fabrics by a spun-bonding method.

A non-woven fabric manufacturing device 10 shown in FIG. 1 includes an endless non-woven fabric belt 12, a plurality of drive rollers 14 that support and drive the nonwoven fabric belt 12, an ejector 16 for spinning and drawing a molten resin polymer onto the non-woven fabric belt 12 and discharging the resultant resin polymer, a suction device 20 for sucking, from the back surface side of the non-woven fabric belt 12, a non-woven fabric 18 in which the resin polymer discharged onto the non-woven fabric belt 12 is deposited as a fibrous aggregate, a press roll 21 positioned to sandwich the non-woven fabric belt 12 between adjacent suction devices 20, and a calender roll 24 for thermocompression bonding the non-woven fabric 18 and embossing a sheet-like non-woven fabric 22. The non-woven fabric belt 12 is formed by loop joining one end of a nonwoven fabric with the other end.

The non-woven fabric belt 12 is required to have various characteristics such as no sticking-in of fibers, stain resistance, washability, runnability, rigidity, static eliminating performance, and non-woven fabric stability (gripping property). In recent years, with an increase in the speed of non-woven manufacturing devices, stability for conveying non-woven fabrics (gripping property) is particularly required. For example, if the gripping force is small, a non-woven fabric to be formed may be folded due to the movement of the non-woven fabric on the non-woven fabric belt at the time of the conveyance of the non-woven fabric on the non-woven fabric belt, which may lead to a decrease in the quality rate of non-woven fabrics.

Thus, as a configuration for improving the gripping force, which is one of the characteristics required for multilayer textiles for non-woven fabrics, the inventors of the present application focused on the frictional resistance of an upper surface side textile located on the side that comes into contact with the non-woven fabric to be conveyed.

First, an explanation will be given regarding an evaluation method for showing the effect of a multilayer textile for a non-woven fabric with increased frictional resistance on the obverse surface of the upper side woven textile, the method for measuring the static frictional force of the textile, and a releasability evaluation test.

### [Gripping Property Evaluation Method]

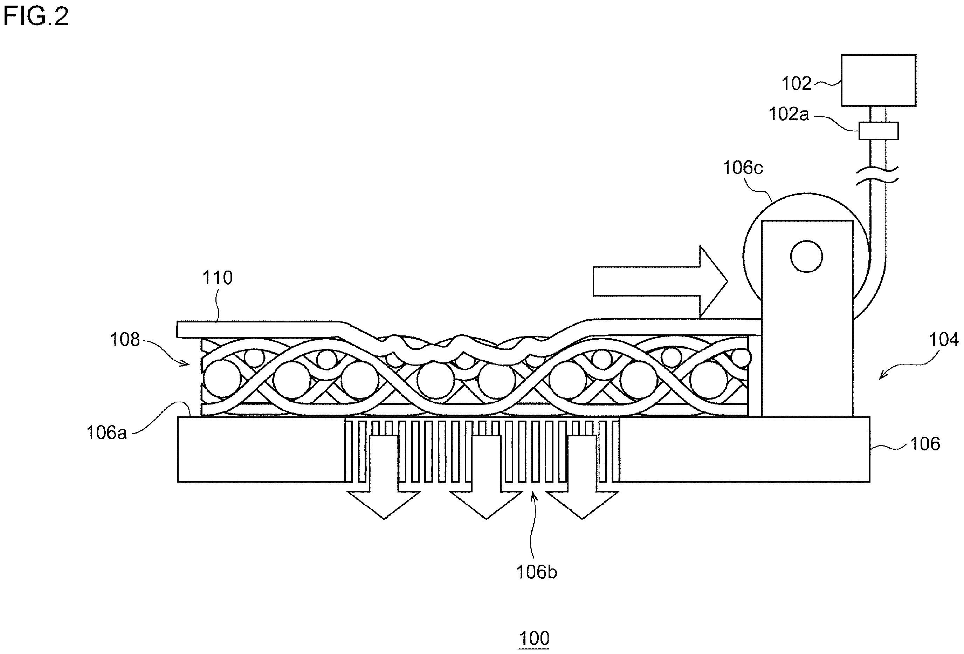

FIG. 2 is a schematic diagram showing the schematic configuration of a device for measuring the gripping property of a multilayer textile for a non-woven fabric on a non-woven fabric.

A measuring device 100 includes a tensile testing machine 102 and a measurement jig 104. For the tensile testing machine 102, a precision universal testing machine AG-IS (manufactured by Shimadzu Corporation) and a load cell for tensile testing machine (100N) were used. For the measurement jig 104, a suction box 106 was used. The suction box 106 has a placement portion 106a on which a multilayer textile 108 for a non-woven fabric is placed, a suction hole 106b formed in the placement portion 106a in order to perform suction from the back surface side of the multilayer textile 108 for a non-woven fabric, and a roller 106c for orienting the pulling direction of a non-woven fabric 110 arranged in the horizontal direction toward a chuck 102a of the tensile testing machine 102.

In the measurement method, the multilayer textile 108 for a non-woven fabric is first placed on the placement portion 106a of the suction box 106. The multilayer textile 108 for a non-woven fabric used for the measurement is strip-shaped with a width of 200 mm and a length of 300 mm. Next, a non-woven fabric 110 is loaded on top of the multilayer textile 108 for a non-woven fabric. The non-woven fabric 110 is strip-shaped with a width of 90 mm and a length of 600 mm, and one end is fixed to the chuck 102a.

Next, suction is applied using a suction device from below the suction hole 106b. The suction force of the suction device is 18.44 kPa, and the air volume is 1.40 m3/min. In this state, a tensile test with the tensile testing machine 102 is started. The test conditions are as follows:
Tensile speed: 100 mm/min
Stroke: 100 mm
Number of N (number of measurements): 3 times
Display of measurement result: Stress

### [Test Method for Static Friction Force]

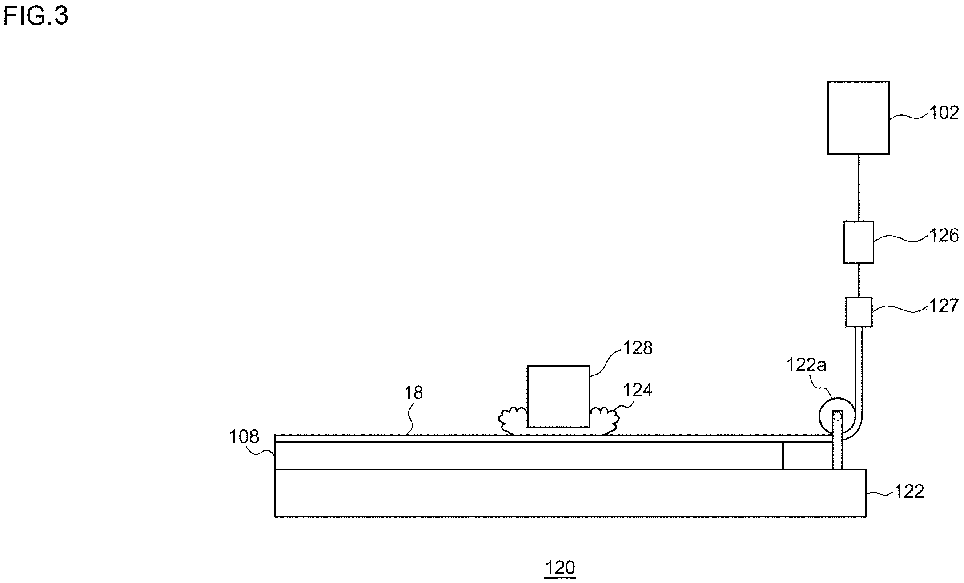

FIG. 3 is a schematic diagram showing the schematic configuration of a device for measuring the static frictional force of a multilayer textile for a non-woven fabric.

A measuring device 120 shown in FIG. 3 includes a tensile testing machine 102, a measurement table 122, a multilayer textile 108 for a non-woven fabric placed on the measurement table 122, and a weight 128 for pressing the nonwoven fabric 18 onto the multilayer textile 108 for a nonwoven fabric. Cotton 124 is arranged between the weight 128 and the non-woven fabric 18.

For the tensile testing machine 102, a precision universal testing machine AG-IS and a load cell for tensile testing machine (100N) were used. The measurement table 122 has a pulley 122a at an end. The weight 128 is available in various weights, and weights of 100 to 975 g were used in the present embodiment. Fixed at one end of the non-woven fabric 18 is a pulled part 127 to which one end of a spring 126 connected to the tensile testing machine 102 is fixed. Then, a weight 128 of a predetermined weight is placed on the nonwoven fabric 18 with the cotton 124 sandwiched therebetween, the force for pulling the non-woven fabric 18 by the tensile testing machine 102 is gradually increased, and the force at the start of movement is measured as the static friction force.

### [Releasability Evaluation Test]

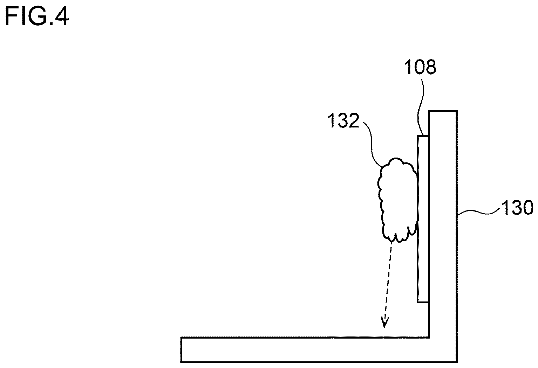

FIG. 4 is a schematic diagram for explaining a releasability evaluation test. In the test method shown in FIG. 4, a multilayer textile 108 for a non-woven fabric was first fixed to a wall 130. Next, cotton 132 was pressed against the multilayer textile 108 for a non-woven fabric, the hand was removed from the cotton 132, and whether or not the cotton 132 fell was observed.

Next, an explanation will be given regarding a textile for a non-woven fabric that constitutes a non-woven fabric belt. The textile for a non-woven fabric that constitutes the non-woven fabric belt 12 may be singlelayered or multi-layered. In the following, a multilayer textile for a non-woven fabric will be used as an example. In the following explanation, "warps" are yarns extending along the direction of non-woven fabric conveyance when a multilayer textile for a non-woven fabric constitutes a looped non-woven fabric belt, and "wefts" are yarns extending in a direction that intersects the warps. The "upper surface side textile" is a textile located on the obverse surface side on which a non-woven fabric is conveyed out of the two sides of a non-woven fabric belt when a multilayer textile for a non-woven fabric is used as the non-woven fabric belt, and the "lower surface side textile" is a textile located mainly on the back surface side where a drive roller comes into contact out of the two sides of the non-woven fabric belt. The term "obverse surface" simply means a surface on the side where the upper surface side textile or the lower surface side textile is exposed. While the "obverse surface" of the upper surface side textile corresponds to the obverse surface side of a nonwoven fabric belt, the "obverse surface" of the lower surface side textile corresponds to the back surface side of the nonwoven fabric belt.

Further, the term "design diagram" represents the minimum repeating unit of a textile texture and corresponds to a weave repeat of the textile. In other words, the term "weave repeat" is repeated from front to back and left to right to form a "textile". Further, the term "knuckle" refers to a part where a warp protrudes on the surface by passing over or under a single or multiple wefts. Further, the term "off-stack structure" indicates a structure in which yarns arranged vertically in the same direction are arranged so as not to overlap each other vertically.

Also, the term "yarn intersection support force" refers to the force applied between a warp and a weft in a knuckle part. In general, knuckles on a single yarn have a strong intersection support force, while long knuckles on multiple yarns tend to have a low intersection support force. Therefore, the texture with the highest intersection support force is a plain weave. This is because a plain weave exhibits the highest knuckle density since all the knuckles form knuckles that are each formed on a single yarn.

Further, the term "binding yarns" means at least some of warps that make up the upper surface side textile (or lower surface side textile) and are yarns that bind the upper surface side textile with the lower surface side textile by the weaving of a weft of the lower surface side textile (or the upper surface side textile) from the back surface side (or the obverse surface side) with a warp that should normally be woven with only a weft of the upper surface side textile (or the lower surface side textile).

The sticking-in of fibers is a phenomenon in which fibers get stuck between the knuckle intersections of yarns. When sticking-in of fibers occurs, problems arise such as (1) occurrence of defects in the non-woven fabric and (2) a decrease in the suction effect obtained through suction due to a decrease in the air permeability of the textile in the part of the sticking-in, resulting in a decrease in the gripping property of the non-woven fabric.

The upper surface side warps and the lower surface side warps that make up the following textile are preferably in the range of about ϕ0.30 to 0.50 mm. However, the range is not necessarily limited to this range. In the same way, the upper surface side wefts are preferably in the range of ϕ0.30 to 0.60 mm, and the lower surface side wefts are preferably in the range of ϕ0.40 to 0.70 mm. However, the range is not necessarily limited to this range.

### (Exemplary Embodiment 1-1)

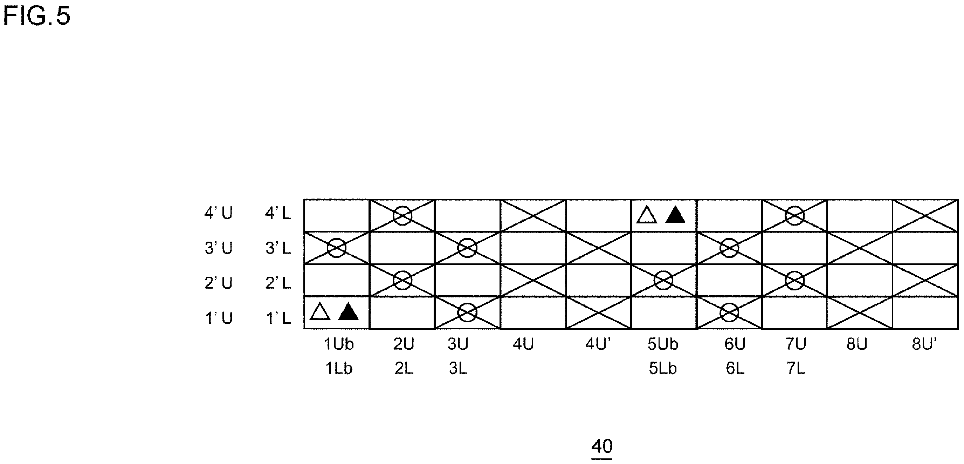

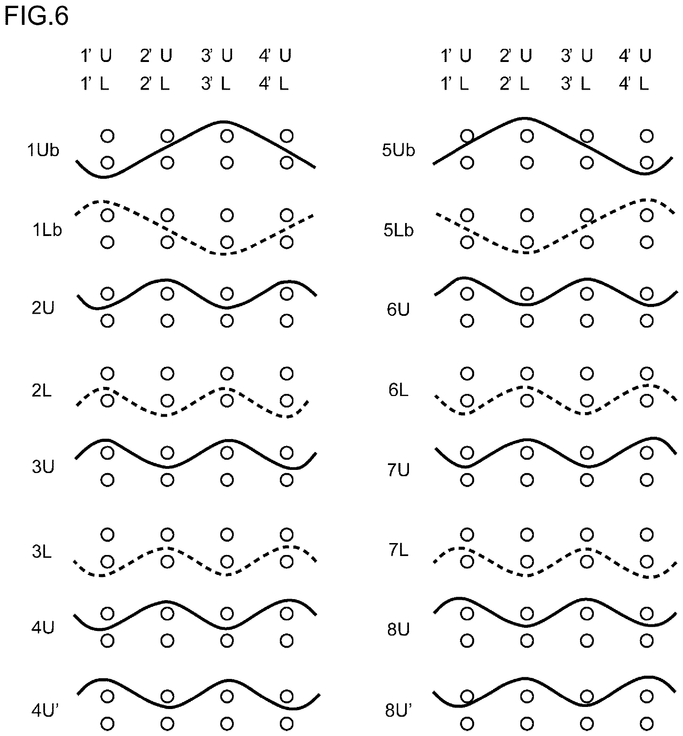

The following is an explanation of the configuration of a multilayer textile for a non-woven fabric according to Exemplary Embodiment 1-1 with reference to the drawings. FIG. 5 is a design diagram showing a weave repeat of the multilayer textile for a non-woven fabric according to Exemplary Embodiment 1-1. FIG. 6 is a cross-sectional view along each warp in the design diagram shown in FIG. 5. In FIG. 5, warp pairs (4U and 4U' and 8U and 8U') are described separately in two rows for the sake of convenience because the upper surface side warps are arranged side by side.

In the design diagrams, warps are represented by Arabic numerals, for example, 1, 2, 3, and so on. Wefts are represented by Arabic numerals with a dash, for example, 1', 2', 3', and so on. Upper surface side yarns are denoted by numbers with "U" or "U'", and lower surface side yarns are denoted by numbers with "L", e.g., 1'U, 2'L, etc. Binding yarns that are binding the upper surface side textile and the lower surface side textile are denoted by numbers with "b".

In the design diagrams, ▲ marks indicate that yarns that are to constitute lower surface side warps originally are placed above upper surface side wefts, × marks indicate that upper side warps are placed above upper surface side wefts, Δ marks indicate that yarns that are supposed to constitute upper surface side warps originally are placed below lower surface side wefts, and o marks indicate that lower surface side warps are placed under lower surface side wefts. In FIG. 6, upper side warp yarns are shown by a solid line, and lower side warps are shown by a dotted line.

A multilayer textile 40 for a non-woven fabric according to the first embodiment shown in FIG. 5 is a multilayer textile formed by a surface plain weave texture composed of one warp pair A (lUb and 1Lb), two warp pairs B (2U and 2L and 3U and 3L), one warp pair C (4U and 4U'), one warp pair A (5Ub and 5Lb), two warp pairs B (6U and 6L and 7U and 7L), one warp pair C (8U and 8U'), upper surface side wefts (1'U, 2'U, 3'U, and 4'U), and lower surface side wefts (1'L, 2'L, 3'L, and 4'L) from the left side.

As shown in FIG. 6, an upper surface side warp 1Ub, which functions as a binding yarn constituting the warp pair A, is woven in such a manner that the upper surface side warp 1Ub passes under a lower surface side weft 1'L so as to form a back surface side knuckle, then passes between an upper surface side weft 2'U and a lower surface side weft 2'L, then passes above an upper surface side weft 3'U so as to form an obverse surface side knuckle, and passes between an upper surface side weft 4'U and a lower surface side weft 4'L.

Further, a lower surface side warp 1Lb, which functions as a binding yarn constituting the warp pair A, is woven in such a manner that the lower surface side warp 1Lb passes above an upper surface side weft 1'U to form an obverse surface side knuckle, then passes between the upper surface side weft 2'U and the lower surface side weft 2'L, then passes below a lower surface side weft 3'L so as to form a back surface side knuckle, and passes between the upper surface side weft 4'U and the lower surface side weft 4'L.

Further, an upper surface side warp 2U constituting the warp pair B is woven in such a manner that the upper surface side warp 2U passes below the upper surface side weft 1'U and then above the upper surface side weft 2'U so as to form an obverse surface side knuckle, and then passes below the upper surface side weft 3'U and then above the upper surface side weft 4'U so as to form an obverse surface side knuckle again.

Further, a lower surface side warp 2L constituting the warp pair B is woven in such a manner that the lower surface side warp 2L passes above the lower surface side weft 1'L and then below the lower surface side weft 2'L so as to form a back surface side knuckle, and then passes above the lower surface side weft 3'L and then below the lower surface side weft 4'L so as to form a back surface side knuckle again.

Further, an upper surface side warp 3U constituting the warp pair B is woven in such a manner that the upper surface side warp 3U passes above the upper surface side weft 1'U so as to form an obverse surface side knuckle, then passes below the upper surface side weft 2'U and then above the upper surface side weft 3'U so as to form an obverse surface side knuckle again, and then passes below the upper surface side weft 4'U.

Further, a lower surface side warp 3L constituting the warp pair B is woven in such a manner that the lower surface side warp 3L passes below the lower surface side weft 1'L so as to form a back surface side knuckle, then passes above the lower surface side weft 2'L and then below the lower surface side weft 3'L so as to form a back surface side knuckle again, and then passes above the lower surface side weft 4'L.

Further, an upper surface side warp 4U constituting the warp pair C is woven in such a manner that the upper surface side warp 4U passes below the upper surface side weft 1'U and then above the upper surface side weft 2'U so as to form an obverse surface side knuckle, and then passes below the upper surface side weft 3'U and then above the upper surface side weft 4'U so as to form an obverse surface side knuckle again.

Further, an upper surface side warp 4U' constituting the warp pair C is woven in such a manner that the upper surface side warp 4U' passes above the upper surface side weft 1'U so as to form an obverse surface side knuckle, then passes below the upper surface side weft 2'U and then above the upper surface side weft 3'U so as to form an obverse surface side knuckle, and then passes below the upper surface side weft 4'U.

Also, an upper surface side warp 5U, which functions as a binding yarn constituting the warp pair A, passes between the upper surface side weft 1'U and the lower surface side weft 1'L and then above the upper surface side weft 2'U so as to form an obverse surface side knuckle, and then passes between the upper surface side weft 3'U and the lower surface side weft 3'L and then below the lower surface side weft 4'L so as to form a back surface side knuckle.

Further, a lower surface side warp 5Lb, which functions as a binding yarn constituting the warp pair A, passes between the upper surface side weft 1'U and the lower surface side weft 1'L and then below the lower surface side weft 2'L so as to form a back surface side knuckle, and then passes between the upper surface side weft 3'U and the lower surface side weft 3'L and then above the upper surface side weft 4'U so as to form an obverse surface side knuckle.

Further, an upper surface side warp 6U constituting the warp pair B is woven in such a manner that the upper surface side warp 6U passes above the upper surface side weft 1'U so as to form an obverse surface side knuckle, then passes below the upper surface side weft 2'U and then above the upper surface side weft 3'U so as to form an obverse surface side knuckle again, and then passes below the upper surface side weft 4'U.

Further, a lower surface side warp 6L constituting the warp pair B is woven in such a manner that the lower surface side warp 6L passes below the lower surface side weft 1'L so as to form a back surface side knuckle, then passes above the lower surface side weft 2'L and then below the lower surface side weft 3'L so as to form a back surface side knuckle again, and then passes above the lower surface side weft 4'L.

Further, an upper surface side warp 7U constituting the warp pair B passes below the upper surface side weft 1'U and then above the upper surface side weft 2'U so as to form an obverse surface side knuckle, and then passes below the upper surface side weft 3'U and then above the upper surface side weft 4'U so as to form an obverse surface side knuckle again.

Further, a lower surface side warp 7L constituting the warp pair B passes above the lower surface side weft 1'L and then below the lower surface side weft 2'L so as to form a back surface side knuckle, and then passes above the lower surface side weft 3'L and then below the lower surface side weft 4'L so as to form a back surface side knuckle again.

Further, an upper surface side warp 8U constituting the warp pair C is woven in such a manner that the upper surface side warp 8U passes above the upper surface side weft 1'U so as to form an obverse surface side knuckle, then passes below the upper surface side weft 2'U and then above the upper surface side weft 3'U so as to form an obverse surface side knuckle again, and then passes below the upper surface side weft 4'U.

Further, an upper surface side warp 8U' constituting the warp pair C passes below the upper surface side weft 1'U and then above the upper surface side weft 2'U so as to form an obverse surface side knuckle, and then passes below the upper surface side weft 3'U and then above the upper surface side weft 4'U so as to form an obverse surface side knuckle again.

In a multilayer textile 40 for a non-woven fabric according to Exemplary Embodiment 1-1, the obverse surface side on which the non-woven fabric is conveyed is coated with a resin different from the material of yarns constituting the textile (for example, a rubber resin classified into the M group of JISK6397 (polymethylene type rubber with a saturated main chain)). This allows the gripping property of the belt to be improved. The rubber resin according to Exemplary Embodiment 1-1 is acrylic rubber (rubber-like copolymer of acrylic esters and other substances (ethylene or acrylonitrile)). The rubber resin may be water soluble.

The hardness of the acrylic rubber applied to the multilayer textile for a non-woven fabric according to Exemplary Embodiment 1-1 after curing was 15 on the durometer hardness (Shore A).

### (Exemplary Embodiment 1-2)

A multilayer textile for a non-woven fabric according to Exemplary Embodiment 1-2 has same weave repeat as that of the multilayer textile for a non-woven fabric according to Exemplary Embodiment 1-1, and the obverse surface side on which the non-woven fabric is conveyed is coated with a resin different from the material of the yarns constituting the textile. More specifically, the difference lies in that a rubber resin classified into the R group of JISK6397 (rubber having an unsaturated carbon bond on the main chain) is applied. This allows the gripping property of the belt to be improved. The rubber resin according to Exemplary Embodiment 1-2 may be styrene butadiene rubber. The rubber resin may be water soluble.

The hardness of the styrene butadiene applied to the multilayer textile for a non-woven fabric according to Exemplary Embodiment 1-2 after curing was 80 on the durometer hardness (Shore A).

### (Exemplary Embodiment 1-3)

A multilayer textile for a non-woven fabric according to Exemplary Embodiment 1-3 is coated with the same styrene butadiene rubber as the rubber resin applied on the obverse surface of the multilayer textile for a non-woven fabric according to Exemplary Embodiment 1-2. However, in order to increase the hardness of the resin, the concentration of the resin at the time of the application is changed. The hardness of the styrene butadiene applied to the multilayer textile for a non-woven fabric according to Exemplary Embodiment 1-3 after curing was 50 on the durometer hardness (Shore A).

### (Exemplary Embodiment 1-4)

A multilayer textile for a non-woven fabric according to Exemplary Embodiment 1-4 is coated with the same styrene butadiene rubber as the rubber resin applied on the obverse surface of the multilayer textile for a non-woven fabric according to Exemplary Embodiment 1-2. However, in order to increase the hardness of the resin, the concentration of the resin at the time of the application is changed. The hardness of the styrene butadiene applied to the multilayer textile for a non-woven fabric according to Exemplary Embodiment 1-4 after curing was 15 on the durometer hardness (Shore A).

### (Comparative Example 1)

A multilayer textile for a non-woven fabric according to Comparative Example 1 is different from the multilayer textile 40 for a non-woven fabric according to Exemplary Embodiment 1-1 in that a rubber resin is not applied to the obverse surface side on which a non-woven fabric is conveyed. Other than that, the textiles are substantially the same.

### (Comparative Example 2)

A multilayer textile for a non-woven fabric according to Comparative Example 2 is different from the multilayer textile for a non-woven fabric according to Comparative Example 1 in that the obverse surface side on which a nonwoven fabric is conveyed is coated with an adhesive resin (e.g., silicone resin). Other than that, the textiles are substantially the same.

### (Comparative Example 3)

A multilayer textile for a non-woven fabric according to Comparative Example 3 is different from the multilayer textile for a non-woven fabric according to Comparative Example 1 in that embossing is applied to the obverse surface side on which a non-woven fabric is conveyed. Other than that, the textiles are substantially the same.

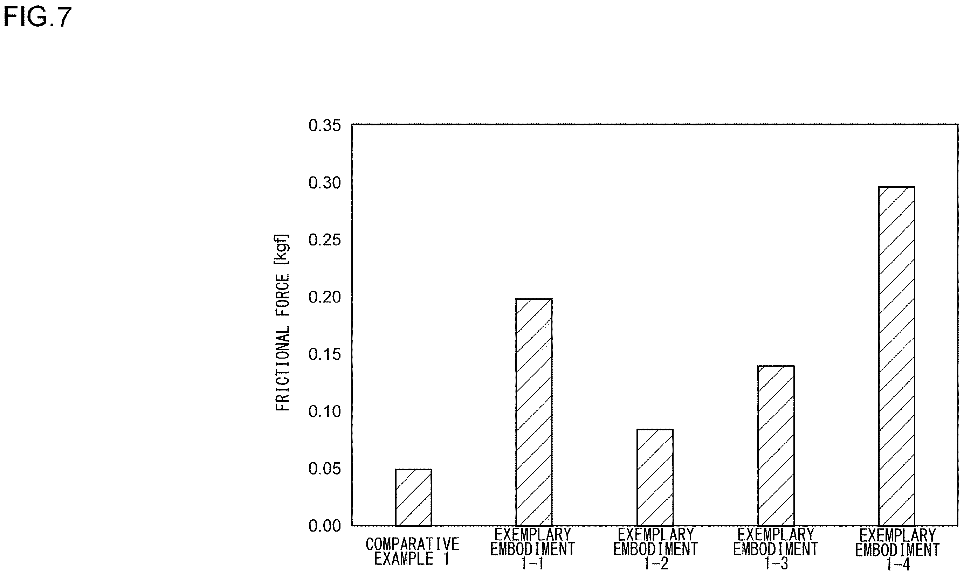

FIG. 7 shows a graph comparing the frictional force value of the multilayer textiles for non-woven fabrics according to Exemplary Embodiment 1-1 through Exemplary Embodiment 1-4 and the frictional force value of the multilayer textile for a non-woven fabric according to Comparative Example 1. As shown in FIG. 7, the frictional force of the multilayer textile for a non-woven fabric according to Exemplary Embodiment 1-1 is 0.20 [kgf] or higher, which is four times the frictional force (less than 0.05 [kgf]) of the multilayer textile for a non-woven fabric according to Comparative Example 1 or higher. In other words, the gripping property can be improved in a non-woven fabric belt using the multilayer textile for a non-woven fabric according to Exemplary Embodiment 1-1.

The frictional force of the multilayer textile for a non-woven fabric according to Exemplary Embodiment 1-2 is 0.084 [kgf], the frictional force of the multilayer textile for a non-woven fabric according to Exemplary Embodiment 1-3 is 0.141 [kgf], and the frictional force of the multilayer textile for a non-woven fabric according to Exemplary Embodiment 1-4 is 0.297 [kgf], all of which are about two to six times the frictional force (less than 0.05 [kgf]) of the multilayer fabric for a non-woven fabric according to Comparative Example 1. In other words, the gripping property can be improved not only in the case of acrylic rubber in Exemplary Embodiment 1-1 but also in a nonwoven fabric belt using the multilayer textile for a nonwoven fabric according to any of Exemplary Embodiment 1-2 through Exemplary Embodiment 1-4 whose obverse surface side is coated with styrene butadiene rubber. By adjusting the concentration of the rubber resin at the time of the application, the application amount can be changed, and the magnitude of the frictional force can be adjusted. In other words, the hardness of the obverse surface side of the textile coated with the rubber resin can be adjusted by the application amount of the rubber resin, and the magnitude of the frictional force of the multilayer textile for a nonwoven fabric can be adjusted.

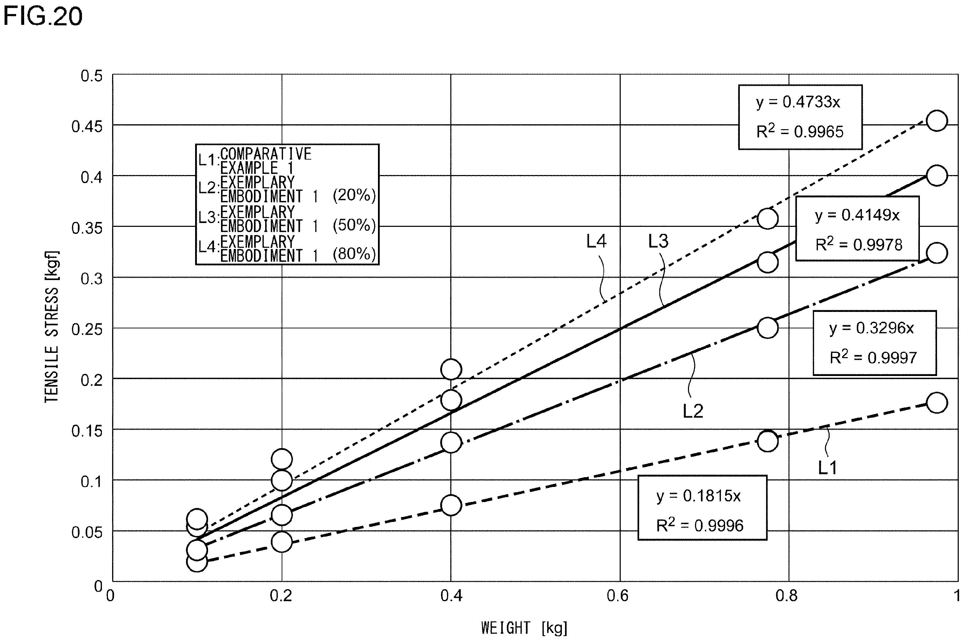

FIG. 20 is a diagram showing a graph of static friction coefficient measurement results. Given that the horizontal axis of the graph represents the weight [kg] of a weight and the vertical axis of the graph represents the tensile stress [kgf], the slope of a linear approximation curve (intercept is zero) that is drawn represents a static friction coefficient. The static friction coefficient of the multilayer textile for a non-woven fabric (line L1) according to Comparative Example 1 is about 0.18. In contrast, the static friction coefficient of the multilayer textile for a non-woven fabric (lines L2, L3, and L4) according to Exemplary Embodiment 1-1 coated with acrylic rubber is in the range of 0.32 to 0.47. The static friction coefficient (gripping force) can be adjusted by adjusting the concentration of a resin to be applied and the moving speed of the belt (multilayer textile for a non-woven fabric) at the time of the application.

The difference in the respective slopes of the lines L2 to L4 is caused due to the difference in resin concentration at the time of the application. More specifically, while moving the belt in the length direction at a moving speed of 22 m/min, resin-containing solutions with a mass% concentration of resin of 20% (line L2), with a mass% concentration of resin of 50% (line L3), and with a mass% concentration of resin of 80% (line L4), respectively, were each applied by a fixed spray to the obverse surface side of the multilayer textile for a non-woven fabric according to Exemplary Embodiment 1-1.

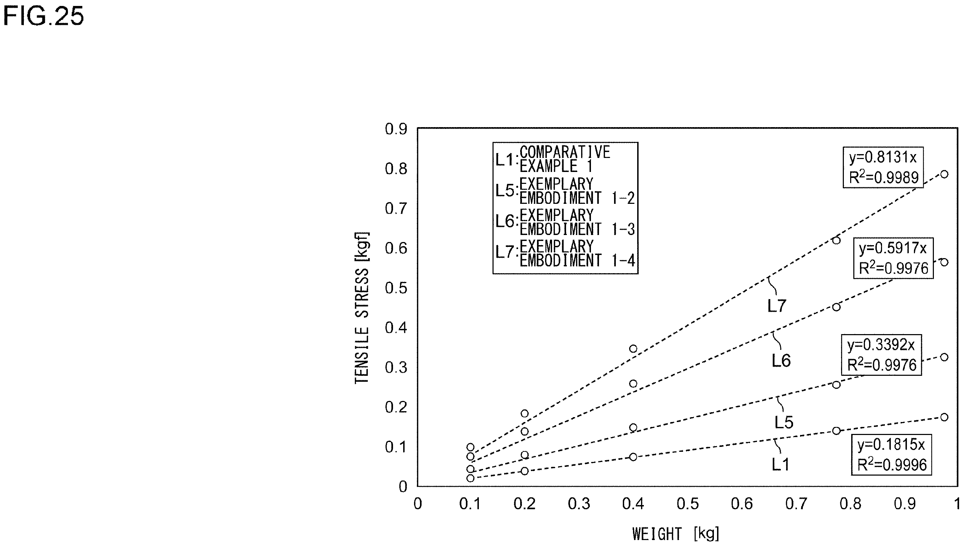

FIG. 25 is a diagram showing a graph of other static friction coefficient measurement results. As in the case of FIG. 20, the static friction coefficient of the multilayer textile for a non-woven fabric (line L1) according to Comparative Example 1 is about 0.18. In contrast, the respective static friction coefficients of the multilayer textiles for non-woven fabrics (lines L5, L6, and L7) according to Exemplary Embodiments 1-2 through 1-4 coated with styrene butadiene rubber and having different surface hardness are in the range of 0.33 to 0.82. The static friction coefficients (gripping force) can be adjusted by adjusting the concentration of the resin to be applied, the hardness of the resin to be applied after the curing, and the moving speed of the belt (multilayer textile for a non-woven fabric) at the time of the application.

The difference in the respective slopes of the lines L5 to L7 is caused due to the difference in resin concentration at the time of the application. More specifically, while moving the belt in the length direction at a moving speed of 22 m/min, resin-containing solutions with a mass% concentration of resin of 20% (line L2), with a mass% concentration of resin of 50% (line L3), and with a mass% concentration of resin of 80% (line L4), respectively, were each applied by a fixed spray to the obverse surface side of a multilayer textile for a non-woven fabric according to each of the exemplary embodiments.

Next, the results of the releasability evaluation test are shown in Table 1.

**[Table 1]**

| | Comparative Example 1 | Comparative Example 2 | Comparative Example 3 | Exemplary Embodiment 1-1 |
|---|---|---|---|---|
| | No processing | Application of starch | Embossing | Application of rubber resin |
| Releasabi lity | ○ | × | × | ○ |

As shown in Table 1, cotton fell immediately on the non-processed multilayer textile for a non-woven fabric according to Comparative Example 1 and on the multilayer textile for a non-woven fabric according to Exemplary Embodiment 1-1 not coated with a rubber resin. On the other hand, in the multilayer textile for a non-woven fabric according to Comparative Example 2 and the multilayer textile for a non-woven fabric according to Comparative Example 3, cotton remained attached to the multilayer textiles for nonwoven fabrics and did not fall. Whether or not cotton falls corresponds to whether or not the non-woven fabric 18 is easily peeled off from the non-woven fabric belt 12 (releasability) in the process of manufacturing the non-woven fabric shown in FIG. 1.

In this way, in the multilayer textile 40 for a non-woven fabric according to Exemplary Embodiment 1-1, after cotton is pressed against the multilayer textile for a nonwoven fabric whose obverse surface side on which the nonwoven fabric is conveyed is tilted in the vertical direction, the time between the release of the hand and the fall of the cotton is ten seconds or less. This makes it easier for the multilayer textile for a non-woven fabric according to Exemplary Embodiment 1-1 to release a non-woven fabric from the belt conveying the non-woven fabric. The gripping property and the releasability are basically trade-off. However, a non-woven belt made of the multilayer textile for a non-woven fabric according to the present embodiment coated with a rubber resin can achieve both a high gripping property and good releasability.

In the multilayer textile for a non-woven fabric according to the present embodiment, if the obverse surface side on which a non-woven fabric is conveyed is coated with a rubber resin or a resin different from the material of the yarns that constitute the textile, the static friction coefficient on the obverse surface side is preferably in the range of 0.25 to 0.90. Thereby, the gripping property can be improved in a non-woven fabric belt using the multilayer textile for a non-woven fabric according to the present embodiment. Regarding the adjustment of the static friction coefficient on the obverse surface side of the multilayer textile for a non-woven fabric, for example, the difference between the height of a warp knuckle (at the position marked with "×" shown in FIG. 5) formed by a warp and the height of a weft knuckle (at the adjacent position of the "×" in FIG. 5) formed by a weft on the obverse surface side on which the non-woven fabric is conveyed may be 100 um or more. This allows the frictional resistance between the obverse surface side of the textile for a non-woven fabric and the non-woven fabric to be increased. Further, due to the difference in knuckle height, the resin applied to the shorter knuckle is protected from surface wear by the higher knuckle.

The multilayer textile for a non-woven fabric according to the present embodiment may be coated with a resin whose hardness on the obverse surface side on which the non-woven fabric is conveyed is in a predetermined range. More specifically, the resin having a durometer hardness of 10 to 80 after the curing is preferred. If the hardness is less than 10 (soft), the releasability is reduced. On the other hand, if the hardness is greater than 80 (hard), the gripping property is reduced. This allows for the realization of a multilayer textile for a non-woven fabric that exhibits both releasability and a gripping property. The durometer hardness according to the present embodiment was measured using a cylindrical indenter of a rubber hardness tester type A standard type (DM-104A: manufactured by MURATEC-KDS CORP.).

### [Shower Resistance Test]

When a belt made of this type of multilayer textile for a non-woven fabric according to the present embodiment is continuously used, dirt will adhere and accumulate on the belt. Therefore, it is necessary to wash off the dirt with a high-pressure shower, and high shower resistance is required. High shower resistance means that the resin applied to the obverse surface of the textile is difficult to peel off when washed with a high-pressure shower. If the shower resistance is low, the gripping property of the multilayer textile for a non-woven fabric deteriorates due to peeling of the resin.

The specific test method involves spraying water at a shower pressure of 2.5 to 20 MPa onto the surface of the multilayer textile for a non-woven fabric. The spraying range for the shower was 10 cm in the warp direction of the multilayer textile for a non-woven fabric, and the shower was moved back and forth once at a moving speed of 20 cm/min. The aforementioned gripping property evaluation was then performed.

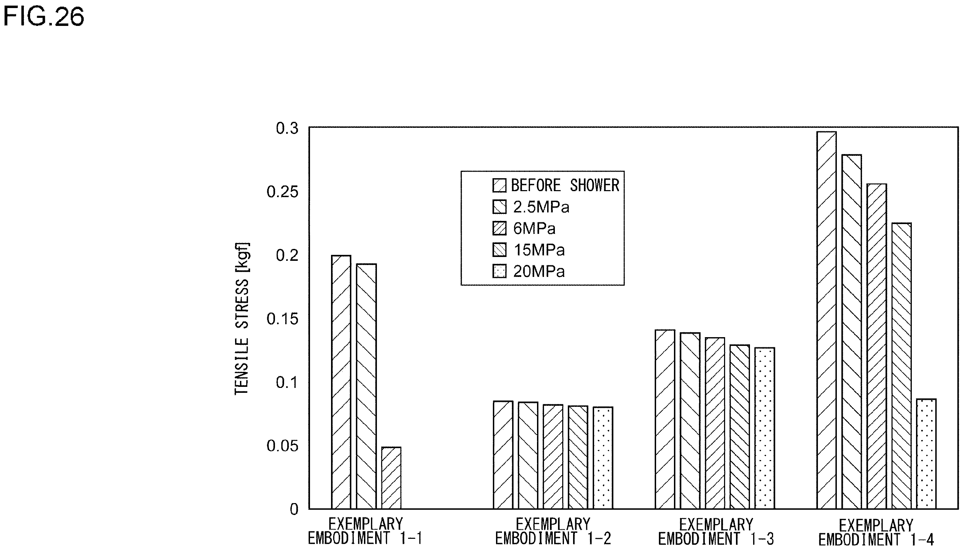

FIG. 26 is a figure showing the results of the shower resistance test on multilayer textiles for non-woven fabrics of Exemplary Embodiment 1-1 through Exemplary Embodiment 1-4. As shown in FIG. 26, it can be seen that the multilayer textile for a non-woven fabric according to Exemplary Embodiment 1-1 whose obverse surface side is coated with acrylic rubber shows a decrease in the gripping force at a shower pressure of 6 MPa. On the other hand, the multilayer textiles for non-woven fabrics according to Exemplary Embodiment 1-2 and Exemplary Embodiment 1-3 showed almost no decrease in gripping force even at a shower pressure of 20 MPa and are found to have high shower resistance. Also, the multilayer textiles for non-woven fabrics according to Exemplary Embodiment 1-2 and Exemplary Embodiment 1-3 showed almost no decrease in gripping force even at a shower pressure of 20 MPa and are found to have high shower resistance. Further, in the multilayer textile for a non-woven fabric according to Exemplary Embodiment 1-4, a decrease in the gripping force was suppressed up to a shower pressure of about 15 MPa.

From the above, with respect to shower resistance, a multilayer textile for a non-woven fabric is preferred whose obverse surface side on which the non-woven fabric is conveyed is coated with a rubber resin classified into the R group of JISK6397 (rubber having an unsaturated carbon bond on the main chain). More preferably, the applied resin has a durometer hardness of 80 or less (60 or less) after the curing.

### [Adhesion Test]

If the adhesive force of a resin on the obverse surface of a multilayer textile for a non-woven fabric is high, the non-woven fabric to be conveyed is less likely to come off the surface of a belt, thus allowing for stable conveyance. On the other hand, since the releasability at the time of transferring from the belt to the next process is reduced, an appropriate adhesive force is required according to the nonwoven fabric manufacturing device and the manufacturing conditions.

An explanation will be given regarding a specific test method. First, a belt sample consisting of a multilayer textile for a non-woven fabric of the size used in the gripping property evaluation is set on a testing machine. Next, one end of a piece of tissue paper having a width of 90 mm and a length of 394 mm is pinched with a chuck and hung on the belt sample such that the entirety is placed. After that, a cylindrical weight weighing 2.4 kg is rolled on the tissue paper to bring the tissue paper and the belt sample into close contact. Then, the chuck pinching one end of the tissue paper is pulled 80 cm upward at a speed of 150 cm/min, and the tensile stress (adhesive force) [kgf] applied to the tissue paper at that time is measured.

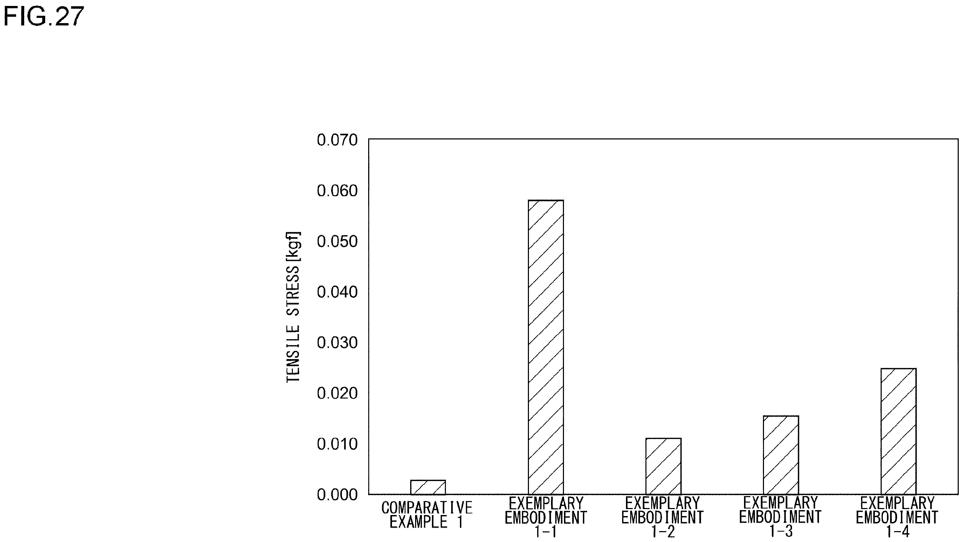

FIG. 27 is a figure showing the results of an adhesion test on the multilayer textiles for non-woven fabrics according to Comparative Example 1 and Exemplary Embodiment 1-1 through Exemplary Embodiment 1-4. As shown in FIG. 27, the multilayer textile for a non-woven fabric according to Exemplary Embodiment 1-1 has a high adhesive force and is thus able to stably convey a non-woven fabric on the belt. On the other hand, the multilayer textiles for non-woven fabrics according to Exemplary Embodiment 1-2 through Exemplary Embodiment 1-4 have a higher adhesive force than that of Comparative Example 1 and a lower adhesive force than that of Exemplary Embodiment 1-1, thus allowing for the realization of stable conveyance and good releasability.

As described above, by applying a resin with a durometer hardness of 50 to 80 after curing, a multilayer textile for a non-woven fabric with an improved gripping force and high shower resistance can be realized. Further, by applying a resin having a durometer hardness of 10 to 20, a multilayer textile for a non-woven fabric having a very high gripping force can be obtained. Therefore, applying such a resin to the obverse surface side of the textile on which a non-woven fabric is conveyed is suitable in the manufacturing of non-woven fabrics, which particularly requires a gripping force. On the other hand, if a resin with a durometer hardness greater than 80 is applied, it becomes difficult to improve the gripping force. Further, if a resin with a durometer hardness of less than 10 is applied, poor release and peeling of the resin are likely to occur.

### (Exemplary Embodiment 2)

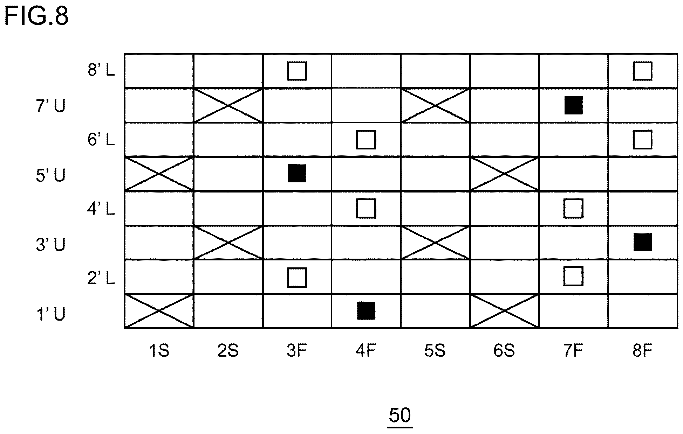

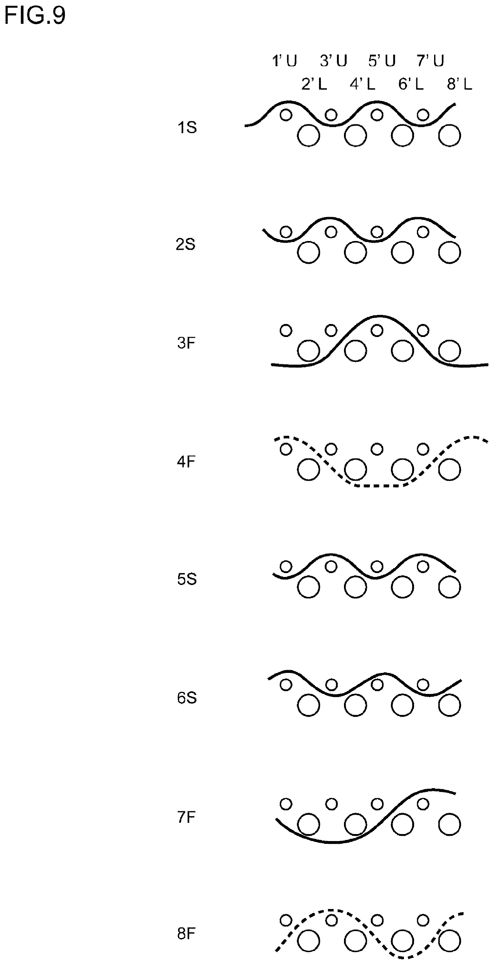

The following is an explanation of the configuration of a multilayer textile for a non-woven fabric according to Exemplary Embodiment 2 with reference to the drawings. FIG. 8 is a design diagram showing a weave repeat of the multilayer textile for a non-woven fabric according to Exemplary Embodiment 2. FIG. 9 is a cross-sectional view along each warp in the design diagram shown in FIG. 8.

In the following design diagrams, warps are represented by Arabic numerals, for example, 1, 2, 3, and so on. Binding yarns are denoted by numbers with "F", and non-binding yarns are denoted by numbers with "S". Wefts are represented by Arabic numerals with a dash, for example, 1', 2', 3', and so on. Upper surface side wefts are denoted by numbers with "U", and lower surface side wefts are denoted by numbers with "L", e.g., 1'U, 2'L, etc.

In the design diagrams, a mark "■" indicates that a binding yarn is arranged above an upper surface side weft, a mark "□" indicates that a binding yarn is arranged below a lower surface side weft, and a mark "×" indicates that a non-binding yarn is arranged above an upper surface side weft.

The multilayer textile 50 for a non-woven fabric according to Exemplary Embodiment 2 is a multilayer textile, and the upper surface side wefts and the lower surface side wefts are arranged so as not to overlap each other vertically. The overlapping of yarns in the design drawings is represented by numbers indicating the yarns in the left part of the design drawings.

The multilayer textile 50 for a non-woven fabric according to Exemplary Embodiment 2 shown in FIG. 8 is a multilayer textile formed by a surface plain weave texture composed of binding yarns F, non-binding yarns S, upper surface side wefts U, and lower surface side wefts L.

As shown in FIG. 8, a binding yarn 4F passes above the upper surface side weft 1'U so as to form an obverse surface side knuckle, then passes above the lower surface side weft 2'L and below the lower surface side weft 3'U, and then passes below the lower surface side weft 4'L and the lower surface side weft 6'L so as to form a back surface side knuckle. Next, the binding yarn 4F passes below the upper surface side weft 7'U and then passes above the lower surface side weft 8'L.

A binding yarn 3F is paired with the adjacent binding yarn 4F. The binding yarn 3F forms an obverse surface side knuckle on the upper surface side of the upper surface side weft 5'U. Then, the two binding yarns 3F and 4F form a single upper surface side warp texture on the obverse surface while forming a knuckle on the upper surface side weft 1'U and the upper surface side weft 5'U.

A non-binding yarn 1S passes above the upper surface side weft 1'U so as to form an obverse surface side knuckle, then passes below the upper surface side weft 3'U and then above the upper surface side weft 5'U so as to form an obverse surface side knuckle, and then passes below the upper surface side weft 7'U.

A non-binding yarn 2S, after passing below the upper surface side weft 1'U, passes above the upper surface side weft 3'U so as to form an obverse surface side knuckle, then passes below the upper surface side weft 5'U, and then passes above the upper surface side weft 7'U so as to form an obverse surface side knuckle.

In the multilayer textile 50 for a non-woven fabric according to Exemplary Embodiment 2, as shown in FIG. 8, binding yarns F and non-binding yarns S each form a pair of two yarns where non-binding yarns 1S and 2S and binding yarns 3F and 4F make a pair and non-binding yarns 5S and 6S and binding yarns 7F and 8F make a pair.

Next, an explanation will be given regarding wefts shown in FIG. 8. There is no limitation to the diameter of the upper surface side wefts (1'U, 3'U, 5'U, and 7'U) and the lower surface side wefts (2'L, 4'L, 6'L, and 8'L). However, the lower surface side wefts are preferably large diameter yarns in order to increase the rigidity of the textile, and the upper surface side wefts are preferably thinner than the lower surface side wefts in order to increase the surface density. The upper surface side wefts and the lower surface side wefts in the multilayer textile 50 for a non-woven fabric have an off-stack structure. Employing an off-stack structure allows the multilayer textile 50 for a non-woven fabric to have increased adhesiveness between the upper surface side wefts and the lower surface side wefts causing the spatial density to be reduced, and the fibers are therefore suppressed from coming off.

Further, as is obvious from the design diagrams, the multilayer textile 50 for a non-woven fabric has a structure with fewer knuckles on the back surface side compared to the knuckles on the obverse surface side.

As described above, in the multilayer textile 50 for a non-woven fabric, an upper surface side textile composed of the upper surface side warps (1S, 2S, 3F, 5S, 6S, and 7F) and the upper surface side wefts (1'U, 3'U, 5'U, and 7'U) and a lower surface side textile composed of the lower surface side warps (4F and 8F) and the lower surface side wefts (2'L, 4'L, 6'L, and 8'L) are bound. The first warps (3F and 7F) of the upper surface side warps function as the first binding yarns binding the upper surface side textile and the lower surface side textile, and the second warps (4F and 8F) of the lower surface side warps function as the second binding yarns binding the upper surface side textile and the lower surface side textile.

In the multilayer textile 50 for a non-woven fabric according to Exemplary Embodiment 2, a resin different from the material of yarns constituting the textile (for example, the obverse surface side on which the non-woven fabric is conveyed is coated with a rubber resin classified into the M group of JISK6397 (polymethylene type rubber with a saturated main chain)).

In this manner, since the upper surface side textile, which is on the side that comes into contact with a non-woven fabric to be conveyed, is coated with a resin that has a higher static friction coefficient, the stability (gripping force) at the time of conveying the non-woven fabric is improved in the multilayer textile 50 for a nonwoven fabric.

On the other hand, the upper surface side warps have third warps (1S, 2S, 5S, and 6S) that pass above the upper surface side wefts and then passe below the adjacent upper surface side wefts and above the lower surface side wefts. As a result, the upper surface side wefts (1'U, 3'U, 5'U, and 7'U) do not protrude from the obverse surface side where the non-woven fabric is conveyed.

Further, in the multilayer textile 50 for a nonwoven fabric, the number (six) of the upper surface side warps in the weave repeat is larger than the number (two) of the lower surface side warps. This causes the texture on the side (obverse surface side) on which the non-woven fabric is conveyed to be dense, increasing fiber supportability, smoothness, and knuckle intersection supportability while causing the opposite side, which is the back surface side, to be sparse, increasing air permeability.

In the multilayer textile 50 for a non-woven fabric according to Exemplary Embodiment 2, as in the schematic diagram shown in FIG. 6, the upper surface side wefts (1'U, 3'U, 5'U, and 7'U) are also woven such that the intersections with the upper surface side warps (1S, 2S, 5S, and 6S) do not project from the upper surface side of the upper surface side warps.

As described above, the multilayer textile 50 for a non-woven fabric has the first binding yarn 3F and the second binding yarn 4F, which make a pair. The first binding yarn 3F passes below two or more lower surface side wefts 8'L and 2'L so as to form the first lower surface side intersection, and the second binding yarn 4F passes below two or more lower surface side wefts (4L' and 6'L) so as to form the second lower surface side intersection. The first lower surface side intersection and the second lower surface side intersection are formed so as to be alternately arranged with respect to the conveyance direction of the non-woven fabric.

As described, on the back surface side of the lower surface side fabric of the multilayer textile 50 for a non-woven fabric, each binding yarn passes below two or more lower surface side wefts so as to form each lower surface side intersection. Therefore, each binding yarn is exposed more on the back surface side of the lower surface side textile, and the area where the binding yarn gets rubbed (worn) against the machine and rolls becomes larger. As a result, the wear resistance is increased, and the life of the multilayer textile can be extended when the multilayer textile is used as a belt.

In the multilayer textile 50 for a non-woven fabric according to Exemplary Embodiment 2, the upper surface side warp density of the upper surface side textile is preferably in the range of 50 to 90 [%], and the lower surface side warp density of the lower surface side textile is preferably in the range of 10 to 40 [%].

### (Exemplary Embodiment 3)

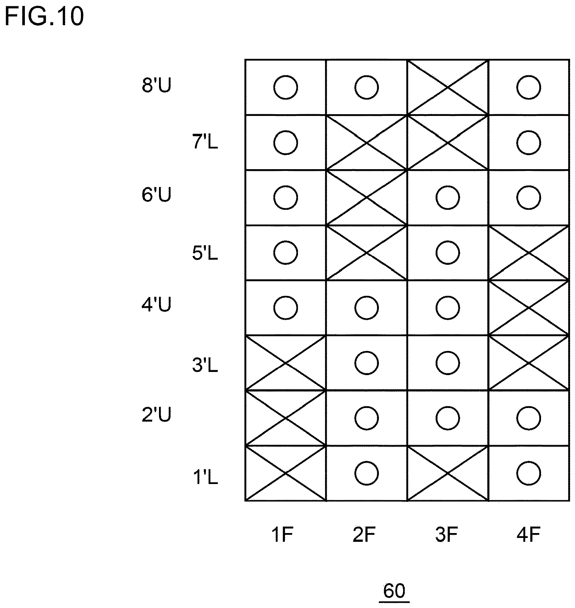

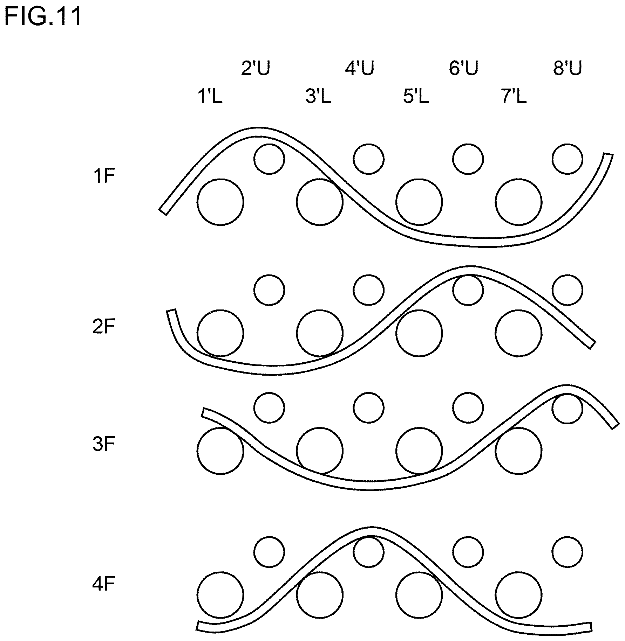

The following is an explanation of the configuration of a multilayer textile for a non-woven fabric according to Exemplary Embodiment 3 with reference to the drawings. FIG. 10 is a design diagram showing a weave repeat of the multilayer textile for a non-woven fabric according to Exemplary Embodiment 3. FIG. 11 is a cross-sectional view along each warp in the design diagram shown in FIG. 10.

The multilayer textile 60 for a non-woven fabric according to Exemplary Embodiment 3 is a multilayer textile, and the upper surface side wefts and the lower surface side wefts are arranged so as not to overlap each other vertically. The overlapping of yarns in the design drawings is represented by numbers indicating the yarns in the left part of the design drawings.

The multilayer textile 60 for a non-woven fabric according to Exemplary Embodiment 3 shown in FIG. 10 is a multilayer textile formed by binding yarns F, upper surface side wefts U, and lower surface side wefts L. The upper surface side wefts are thinner than the lower surface side wefts.

As shown in FIG. 11, a binding yarn 1F passes above the lower surface side weft 1'L and then above the upper surface side weft 2'U so as to form an obverse surface side knuckle and then passes above the lower surface side weft 3'L and below the lower surface side weft 5'L and the lower surface side weft 7'L so as to form a back surface side knuckle. The binding yarn 1F then passes below the upper surface side weft 8'U.

A binding yarn 2F passes below the lower surface side weft 1'L and the lower surface side weft 3'L so as to form a back surface side knuckle, then passes below the upper surface side weft 4'U, and then passes above the upper surface side weft 6'U so as to form an obverse surface side knuckle. Next, the binding yarn 2F passes above the lower surface side weft 7'L and then passes below the upper surface side weft 8'U.

A binding yarn 3F passes above the lower surface side weft 1'L and then the lower surface side weft 3'L and the lower surface side weft 5'L so as to form a back surface side knuckle, then passes below the upper surface side weft 6'U, and then passes above the lower surface side weft 7'L and the upper surface side weft 8'U so as to form an obverse surface side knuckle.

A binding yarn 4F passes below the lower surface side weft 1'L and then the lower surface side weft 3'L and the upper surface side weft 4'U so as to form an obverse surface side knuckle, then passes below the lower surface side weft 5'L and the upper surface side weft 6'U, and then forms a back surface side knuckle below the lower surface side weft 7'L. The binding yarn 1F then passes below the upper surface side weft 8'U.

In the multilayer textile 60 for a non-woven fabric according to Exemplary Embodiment 3, the obverse surface side on which the non-woven fabric is conveyed is coated with a resin different from the material of yarns constituting the textile (for example, a rubber resin classified into the M group of JISK6397 (polymethylene type rubber with a saturated main chain)).

In this manner, since the upper surface side textile, which is on the side that comes into contact with a non-woven fabric to be conveyed, is coated with a resin that has a higher static friction coefficient, the stability (gripping force) at the time of conveying the non-woven fabric is improved in the multilayer textile 60 for a nonwoven fabric.

### (Exemplary Embodiment 4)

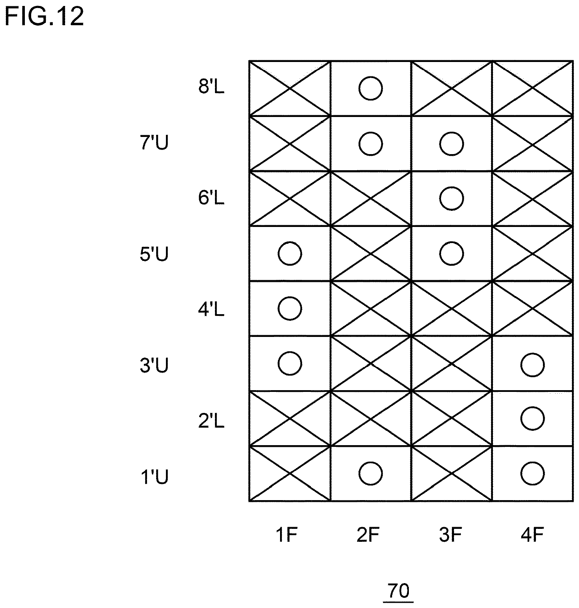

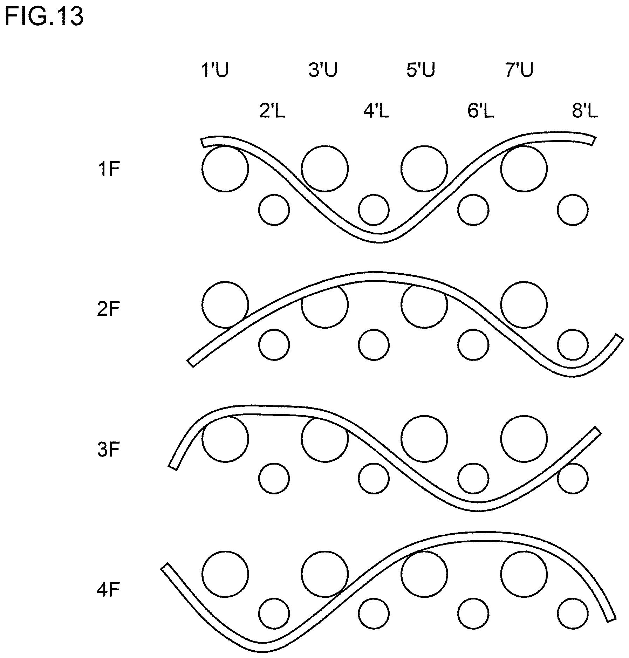

The following is an explanation of the configuration of a multilayer textile for a non-woven fabric according to Exemplary Embodiment 4 with reference to the drawings. FIG. 12 is a design diagram showing a weave repeat of the multilayer textile for a non-woven fabric according to Exemplary Embodiment 4. FIG. 13 is a cross-sectional view along each warp in the design diagram shown in FIG. 12.

The multilayer textile 70 for a non-woven fabric according to Exemplary Embodiment 4 is a multilayer textile, and the upper surface side wefts and the lower surface side wefts are arranged so as not to overlap each other vertically. The overlapping of yarns in the design drawings is represented by numbers indicating the yarns in the left part of the design drawings.

The multilayer textile 70 for a non-woven fabric according to Exemplary Embodiment 4 shown in FIG. 12 is a multilayer textile formed by binding yarns F, upper surface side wefts U, and lower surface side wefts L. The upper surface side wefts are thicker than the lower surface side wefts.

As shown in FIG. 13, a binding yarn 1F passes above the upper surface side weft 7'U and the upper surface side weft 1'U so as to form an obverse surface side knuckle, then passes above the lower surface side weft 2'L and below the upper surface side weft 3'U, and then passes below the lower surface side weft 4'L so as to form a back surface side knuckle. Next, the binding yarn 1F passes below the upper surface side weft 5'U and then passes above the lower surface side weft 6'L.

After passing below the upper surface side weft 1'U, the binding yarn 2F passes above the lower surface side weft 2'L and passes above the upper surface side weft 3'U and the upper surface side weft 5'U so as to form an obverse surface side knuckle, then passes above the lower surface side weft 6'L and then below the upper surface side weft 7'U, and passes below the lower surface side weft 8'L so as to form a back surface side knuckle.

A binding yarn 3F passes above the upper surface side weft 1'U and the upper surface side weft 3'U so as to form an obverse surface side knuckle, then passes above the lower surface side weft 4'L, and then passes below the lower surface side weft 6'L so as to form a back surface side knuckle. Next, the binding yarn 3F passes below the upper surface side weft 7'U and then passes above the lower surface side weft 8'L.

After passing below the upper surface side weft 1'U, a binding yarn 4F passes below the lower surface side weft 2'L so as to form a back surface side knuckle, then passes below the upper surface side weft 3'U and above the lower surface side weft 4'L, and then passes above the upper surface side weft 5'U and the upper surface side weft 7'U so as to form an obverse surface side knuckle. The binding yarn 4F then passes above the upper surface side weft 8'L.

In the multilayer textile 70 for a non-woven fabric according to Exemplary Embodiment 4, the obverse surface side on which the non-woven fabric is conveyed is coated with a resin different from the material of yarns constituting the textile (for example, a rubber resin classified into the M group of JISK6397 (polymethylene type rubber with a saturated main chain)).

In this manner, since the upper surface side textile, which is on the side that comes into contact with a non-woven fabric to be conveyed, is coated with a resin that has a higher static friction coefficient, the stability (gripping force) at the time of conveying the non-woven fabric is improved in the multilayer textile 70 for a nonwoven fabric.

### (Exemplary Embodiment 5)

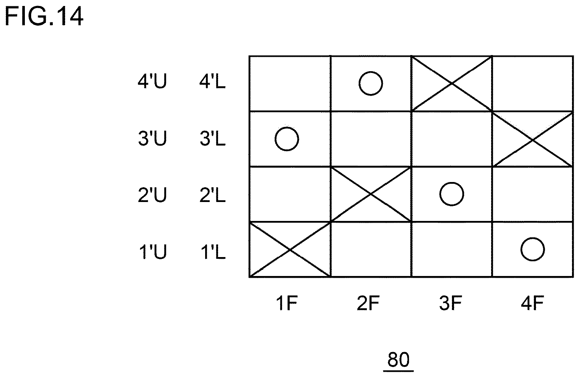

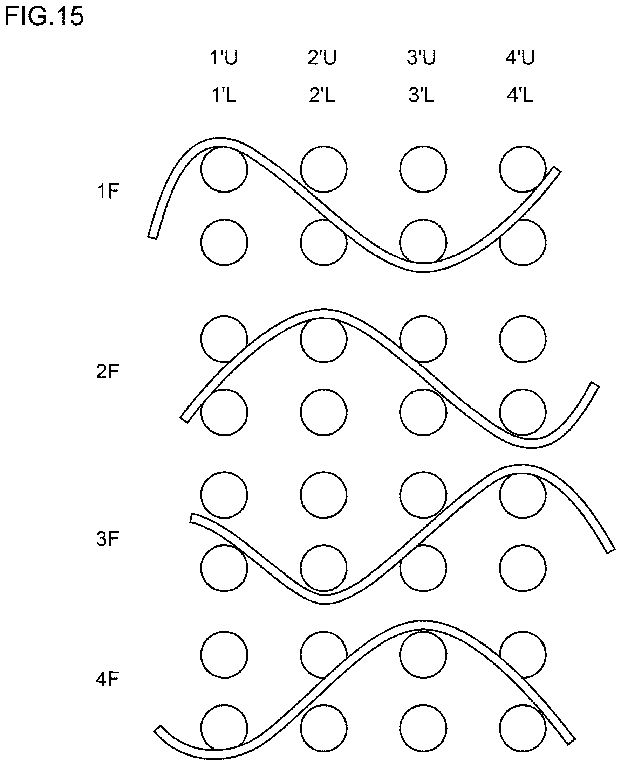

The following is an explanation of the configuration of a multilayer textile for a non-woven fabric according to Exemplary Embodiment 5 with reference to the drawings. FIG. 14 is a design diagram showing a weave repeat of the multilayer textile for a non-woven fabric according to Exemplary Embodiment 5. FIG. 15 is a cross-sectional view along each warp in the design diagram shown in FIG. 14.

The multilayer textile 80 for a non-woven fabric according to Exemplary Embodiment 5 is a multilayer textile, and the upper surface side wefts and the lower surface side wefts are arranged so as to overlap each other vertically. The overlapping of yarns in the design drawings is represented by numbers indicating the yarns in the left part of the design drawings.

The multilayer textile 80 for a non-woven fabric according to Exemplary Embodiment 5 shown in FIG. 14 is a multilayer textile formed by binding yarns F, upper surface side wefts U, and lower surface side wefts L.

As shown in FIG. 15, a binding yarn 1F passes above the upper surface side weft 1'U so as to form an obverse surface side knuckle, then passes between the upper surface side weft 2'U and the lower surface side weft 2'L, and then passes below the lower surface side weft 3'L so as to form a back surface side knuckle. The binding yarn 1F then passes between the upper surface side weft 4'U and the lower surface side weft 4'L.

A binding yarn 2F passes between the upper surface side weft 1'U and the lower surface side weft 1'L and then above the upper surface side weft 2'U so as to form an obverse surface side knuckle, and then passes between the upper surface side weft 3'U and the lower surface side weft 3'L and then below the lower surface side weft 4'L so as to form a back surface side knuckle.

A binding yarn 3F passes between the upper surface side weft 1'U and the lower surface side weft 1'L and then below the lower surface side weft 2'L so as to form a back surface side knuckle, and then passes between the upper surface side weft 3'U and the lower surface side weft 3'L and then above the upper surface side weft 4'U so as to form an obverse surface side knuckle.

A binding yarn 4F passes below the lower surface side weft 1'L so as to form a back surface side knuckle, then passes between the upper surface side weft 2'U and the lower surface side weft 2'L, and then passes above the upper surface side weft 3'U so as to form an obverse surface side knuckle. The binding yarn 4F then passes between the upper surface side weft 4'U and the lower surface side weft 4'L.

In the multilayer textile 80 for a non-woven fabric according to Exemplary Embodiment 5, the obverse surface side on which the non-woven fabric is conveyed is coated with a resin different from the material of yarns constituting the textile (for example, a rubber resin classified into the M group of JISK6397 (polymethylene type rubber with a saturated main chain)).

In this manner, since the upper surface side textile, which is on the side that comes into contact with a non-woven fabric to be conveyed, is coated with a resin that has a higher static friction coefficient, the stability (gripping force) at the time of conveying the non-woven fabric is improved in the multilayer textile 80 for a nonwoven fabric.

### (Exemplary Embodiment 6)

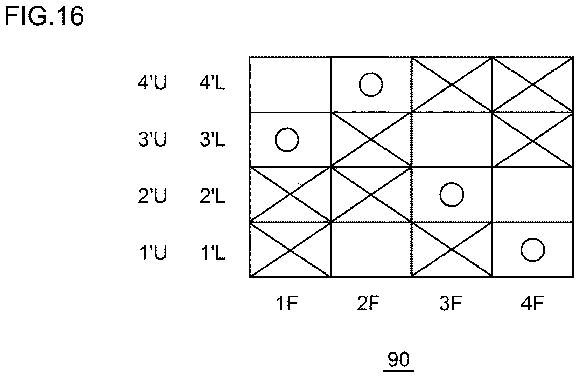

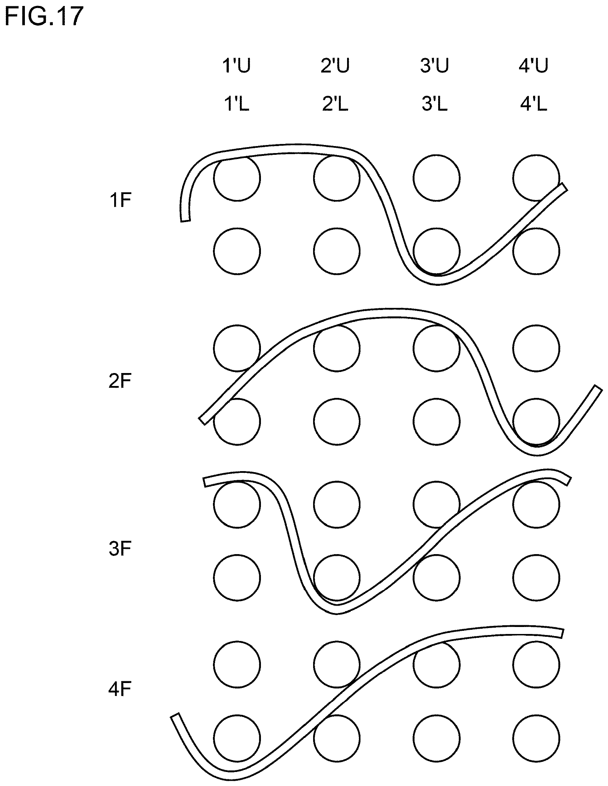

The following is an explanation of the configuration of a multilayer textile for a non-woven fabric according to Exemplary Embodiment 6 with reference to the drawings. FIG. 16 is a design diagram showing a weave repeat of the multilayer textile for a non-woven fabric according to Exemplary Embodiment 6. FIG. 17 is a cross-sectional view along each warp in the design diagram shown in FIG. 16.

The multilayer textile 90 for a non-woven fabric according to Exemplary Embodiment 6 is a multilayer textile, and the upper surface side wefts and the lower surface side wefts are arranged so as to overlap each other vertically. The overlapping of yarns in the design drawings is represented by numbers indicating the yarns in the left part of the design drawings.

The multilayer textile 90 for a non-woven fabric according to Exemplary Embodiment 6 shown in FIG. 16 is a multilayer textile formed by binding yarns F, upper surface side wefts U, and lower surface side wefts L.

As shown in FIG. 17, a binding yarn 1F passes above the upper surface side weft 1'U and the upper surface side weft 2'U so as to form an obverse surface side knuckle, and then passes below the lower surface side weft 3'L so as to form a back surface side knuckle. The binding yarn 1F then passes between the upper surface side weft 4'U and the lower surface side weft 4'L.

A binding yarn 2F passes between the upper surface side weft 1'U and the lower surface side weft 1'L, passes above the upper surface side weft 2'U and the upper surface side weft 3'U so as to form an obverse surface side knuckle, and then passes below the lower surface side weft 4'L so as to form a back surface side knuckle.

A binding yarn 3F passes above the upper surface side weft 4'U and the upper surface side weft 1'U so as to form an obverse surface side knuckle, and then passes below the lower surface side weft 2'L so as to form a back surface side knuckle. The binding yarn 3F then passes between the upper surface side weft 3'U and the lower surface side weft 3'L.

A binding yarn 4F passes below the lower surface side weft 1'L so as to form a back surface side knuckle, then passes between the upper surface side weft 2'U and the lower surface side weft 2'L, and then passes above the upper surface side weft 3'U and the upper surface side weft 4'U so as to form an obverse surface side knuckle.

In the multilayer textile 90 for a non-woven fabric according to Exemplary Embodiment 6, the obverse surface side on which the non-woven fabric is conveyed is coated with a resin different from the material of yarns constituting the textile (for example, a rubber resin classified into the M group of JISK6397 (polymethylene type rubber with a saturated main chain)).

In this manner, since the upper surface side textile, which is on the side that comes into contact with a non-woven fabric to be conveyed, is coated with a resin that has a higher static friction coefficient, the stability (gripping force) at the time of conveying the non-woven fabric is improved in the multilayer textile 90 for a nonwoven fabric.

### (Exemplary Embodiment 7)

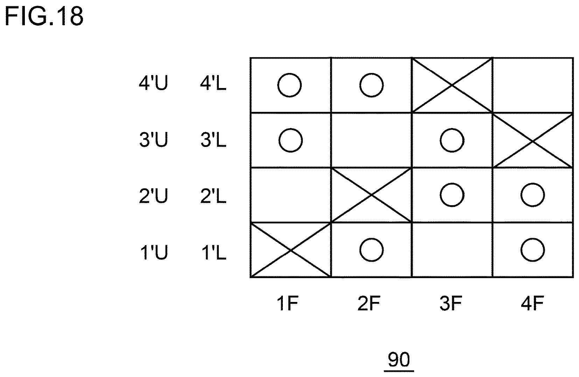

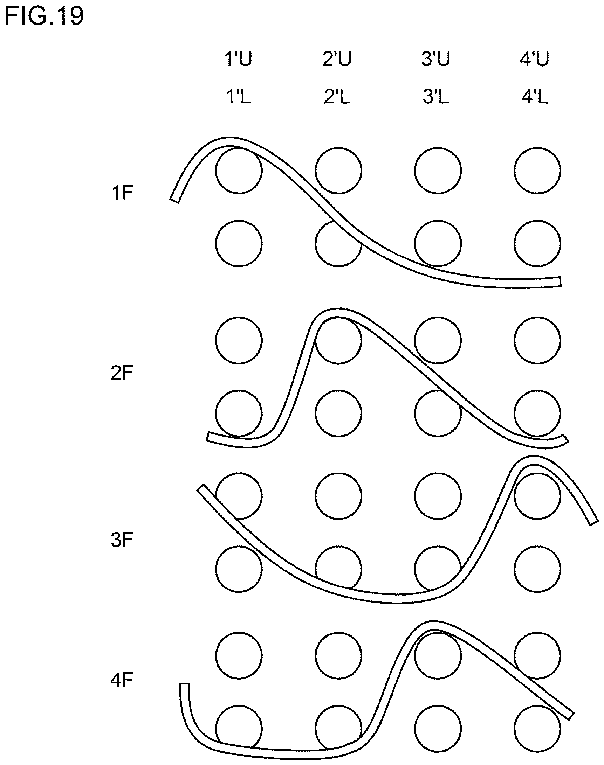

The following is an explanation of the configuration of a multilayer textile for a non-woven fabric according to Exemplary Embodiment 7 with reference to the drawings. FIG. 18 is a design diagram showing a weave repeat of the multilayer textile for a non-woven fabric according to Exemplary Embodiment 7. FIG. 19 is a cross-sectional view along each warp in the design diagram shown in FIG. 18.

The multilayer textile 92 for a non-woven fabric according to Exemplary Embodiment 7 is a multilayer textile, and the upper surface side wefts and the lower surface side wefts are arranged so as to overlap each other vertically. The overlapping of yarns in the design drawings is represented by numbers indicating the yarns in the left part of the design drawings.

The multilayer textile 92 for a non-woven fabric according to Exemplary Embodiment 7 shown in FIG. 18 is a multilayer textile formed by binding yarns F, upper surface side wefts U, and lower surface side wefts L.

As shown in FIG. 19, the binding yarn 1F passes above the upper surface side weft 1'U so as to form an obverse surface side knuckle, then passes between the upper surface side weft 2'U and the lower surface side weft 2'L, and then passes below the lower surface side weft 3'L and the lower surface side weft 4'L so as to form a back surface side knuckle.

The binding yarn 2F passes below the lower surface side weft 4'L and the lower surface side weft 1'L so as to form a back surface side knuckle, then passes above the upper surface side weft 2'U so as to form an obverse surface side knuckle, and then passes between the upper surface side weft 3'U and the lower surface side weft 3'L.

The binding yarn 3F passes between the upper surface side weft 1'U and the lower surface side weft 1'L, then passes below the lower surface side weft 2'L and the lower surface side weft 3'L so as to form a back surface side knuckle, and then passes above the upper surface side weft 4'U so as to form an obverse surface side knuckle.

The binding yarn 4F passes below the lower surface side weft 1'L and the lower surface side weft 2'L so as to form a back surface side knuckle, then passes above the upper surface side weft 3'U so as to form an obverse surface side knuckle, and then passes between the upper surface side weft 4'U and the lower surface side weft 4'L.

In the multilayer textile 92 for a non-woven fabric according to Exemplary Embodiment 7, the obverse surface side on which the non-woven fabric is conveyed is coated with a resin different from the material of yarns constituting the textile (for example, a rubber resin classified into the M group of JISK6397 (polymethylene type rubber with a saturated main chain)).

In this manner, since the upper surface side textile, which is on the side that comes into contact with a non-woven fabric to be conveyed, is coated with a resin that has a higher static friction coefficient, the stability (gripping force) at the time of conveying the non-woven fabric is improved in the multilayer textile 92 for a nonwoven fabric.

### (Exemplary Embodiment 8)

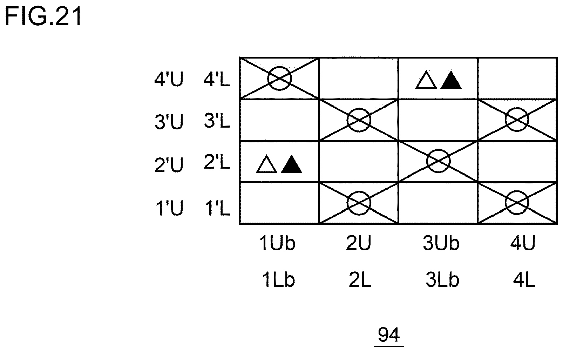

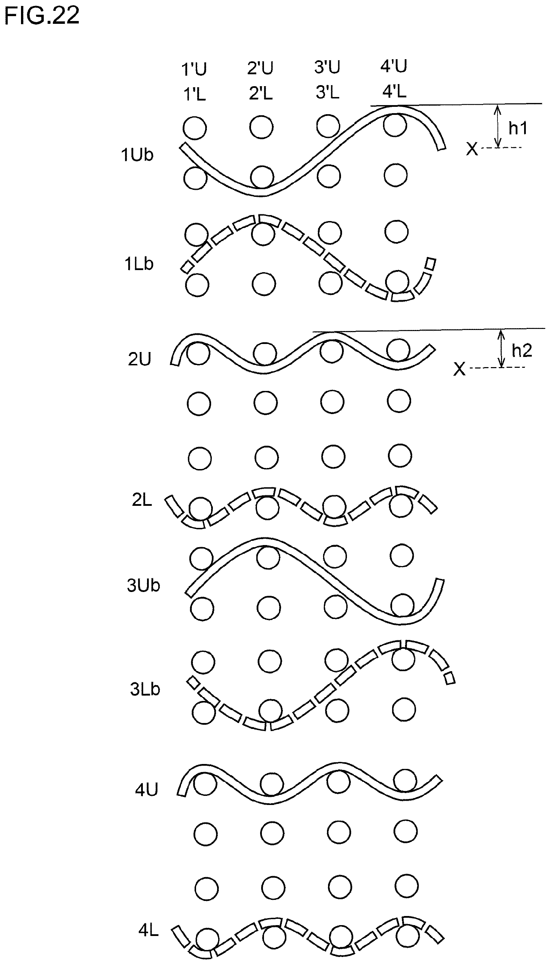

FIG. 21 is a design diagram showing a weave repeat of the multilayer textile for a non-woven fabric according to Exemplary Embodiment 8. FIG. 22 is a cross-sectional view along each warp in the design diagram shown in FIG. 21.

A multilayer textile 94 for a non-woven fabric according to Exemplary Embodiment 8 shown in FIG. 21 is a multilayer textile formed by a surface plain weave texture composed of a warp pair A (lUb and 1Lb), a warp pair B (2U and 2L), a warp pair C (3Ub and 3Lb), a warp pair D (4U and 4L), upper surface side wefts (1'U, 2'U, 3'U, and 4'U), and lower surface side wefts (1'L, 2'L, 3'L, and 4'L) from the left side.

Having the configurations shown in FIGS. 21 and 22 allows the multilayer textile 94 for a non-woven fabric according to Exemplary Embodiment 8 to have a plain weave texture for both the upper surface side textile on the obverse surface side and the lower surface side textile on the back surface side. A non-woven fabric belt using a multilayer textile 94 for a non-woven fabric in which plain weave textures are regularly formed on the obverse surface can improve non-woven fabric web supportability since the number of fiber support points of the textile supporting the non-woven fabric web is large. Further, the plain-woven upper surface side textile has a higher intersection support force, which suppresses the sticking-in of fibers.

As shown in FIG. 22, the multilayer textile 94 for a non-woven fabric according to Exemplary Embodiment 8 is woven under the condition that the difference between the height h1 (height from a reference position X) of the first knuckle formed by the warp binding yarns (lUb, 1Lb, 3Ub, and 3Lb) and the height h2 (height from the reference position X) of the second knuckle formed by the upper surface side warps (2U and 4U) is about 80 um. In other words, the difference in height between the first knuckle and the second knuckle expressed by "|h1-h2|" is greater than the difference in knuckle height expressed by "|h1-h2|" in conventional multilayer textiles for non-woven fabrics, thereby improving the gripping property for non-woven fabrics. In Exemplary Embodiment 8, the height h1 of the first knuckle is higher than the height h2 of the second knuckle. The reference position X may be any position as long as the difference in height between the knuckles can be calculated.

Since the multilayer textile 94 for a non-woven fabric according to Exemplary Embodiment 8 can have a difference in height between the warp knuckles, the resin applied to the lower knuckle is protected from wear. As a result, the effect of improving the gripping property by the resin can be long-lasting.

### (Exemplary Embodiment 9)

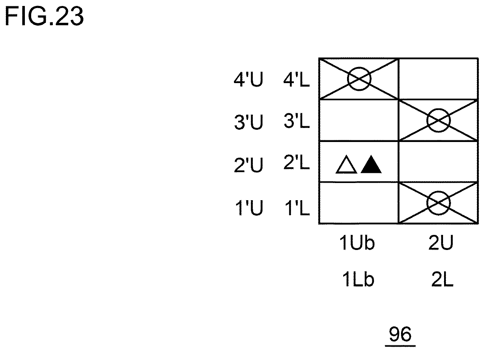

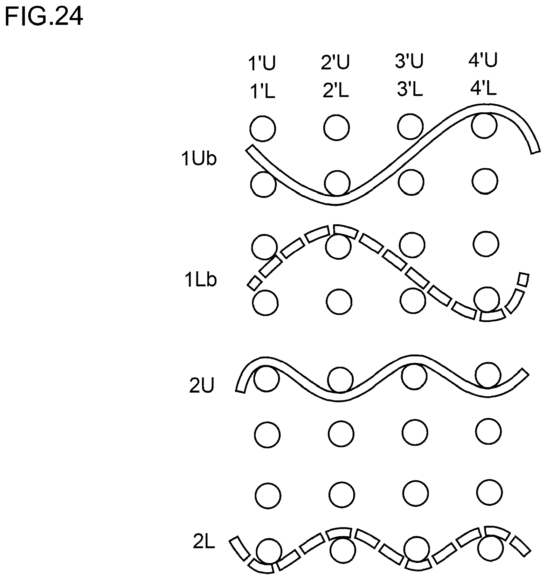

FIG. 23 is a design diagram showing a weave repeat of the multilayer textile for a non-woven fabric according to Exemplary Embodiment 9. FIG. 24 is a cross-sectional view along each warp in the design diagram shown in FIG. 23.

In the multilayer textile 96 for a non-woven fabric according to Exemplary Embodiment 9, an upper surface side textile composed of the upper surface side warps (lUb and 2U) and the upper surface side wefts (1'U, 2'U, 3'U, and 4'U) and a lower surface side textile composed of the lower surface side warps (1Lb and 2L) and the lower surface side wefts (1'L, 2'L, 3'L, and 4'L) are bound by the warp binding yarns (lUb and 1Lb). The multilayer textile 96 for a nonwoven fabric according to Exemplary Embodiment 9 has the same method of weaving and knuckle size as the multilayer textile 94 for a non-woven fabric according to Exemplary Embodiment 8, except that the upper surface side warps (3Ub and 4U) and the lower surface side warps (3Lb and 4L) in the multilayer textile 94 for a non-woven fabric according to Exemplary Embodiment 8 are absent. Also in the multilayer textile for a non-woven fabric according to Exemplary Embodiment 9, the difference in height between the first knuckle and the second knuckle expressed by "|h1-h2|" is greater than the difference in knuckle height expressed by "|h1-h2|" in conventional multilayer textiles for non-woven fabrics, thereby improving the gripping property for non-woven fabrics.

Since the multilayer textile 96 for a non-woven fabric according to Exemplary Embodiment 9 can have a difference in height between the warp knuckles, the resin applied to the lower knuckle is protected from wear. As a result, the effect of improving the gripping property by the resin can be long-lasting.

### (Exemplary Variation)

Some of the warps form loops at both ends further outside the wefts included in a weave repeat, and a pintle wire is inserted into each loop such that the upper surface side textile is positioned on the obverse surface side on which the non-woven fabric is conveyed. Thereby, each multilayer textile for a non-woven fabric is formed to be an endless non-woven fabric belt.

The diameter of each yarn is, for example, in the range of 0.10 to 1.20 mm. For example, the diameter of the upper surface side warps may be 0.40 mm, the diameter of the lower surface side warps may be 0.40 mm, the diameter of the upper surface side wefts may be 0.50 mm, and the diameter of the lower surface side wefts may be 0.50 mm.

The yarns used for the warps and wefts according to each of the above-mentioned embodiments and the exemplary embodiments may be selected as appropriate depending on the application and the location where they are used. For example, the cross-sectional shape of the yarns is not limited to a circular shape, and yarns having a quadrangular shape, a star shape, etc., and yarns having an elliptical shape, a hollow shape, a sheath-core structure shape, etc., can be used. Further, the yarn material can be freely selected as long as the yarn satisfies the desired characteristics, and polyethylene terephthalate, polyester, polyamide, polyphenylene sulfide, polyvinylidene fluoride, polypropylene, aramid, polyether ether ketone, polyethylene naphthalate, polytetrafluoroethylene, cotton, wool, metals, thermoplastic polyurethane, thermoplastic elastomers, etc., can be used. Needless to say, yarns prepared from a copolymer and yarns prepared by blending or adding various substances to such a material may be used according to the purpose. In general, polyester monofilaments having rigidity and excellent dimensional stability are preferably used as yarns constituting textiles for non-woven fabrics. Further, conductive carbon yarns may be interwoven.

The resin may be applied to the belt by coater roll, spray, brush, or dipping. In particular, when the resin is applied by spraying, there is little coating unevenness of the resin, and the possibility of the resin clogging the mesh is reduced. Further, the gripping force of the belt may be enhanced by weaving in yarns having a highfriction surface coated with the resin according to the present embodiment in advance. As applications, multilayer textile for non-woven fabrics according to the present embodiment are suitable for manufacturing non-woven fabrics in the spun-bonding method, the melt blow method, the hydroentanglement, the dry method, the airlaid method, the calender method, the wet method, the chemical bond method, the thermal bond method, and the needle punch method.

While the invention has been described by referring to the above-described embodiment, the invention is not limited to the above-described embodiment, and the appropriate combination of the configurations of the embodiment or the substitution thereof is also included in the invention. Further, the combination of the embodiments or the process sequence thereof may be appropriately set or various modifications in design may be added to the embodiments based on the knowledge of the person skilled in the art. An embodiment having such modifications may be also included in the scope of the invention.

### [INDUSTRIAL APPLICABILITY]

The present invention relates to textiles used for conveying non-woven fabrics.

### [REFERENCE SIGNS LIST]

10 non-woven fabric manufacturing device, 12 non-woven fabric belt, 18 non-woven fabric, 40, 50, 60, 70, 80, 90, 92, 108multilayer textile for non-woven fabric, 132 cotton

## Claims

1. A textile for a non-woven fabric whose obverse surface side on which the non-woven fabric is conveyed is coated with a rubber resin classified into the R group of JISK6397 (rubber having an unsaturated carbon bond on the main chain).

2. The textile for a non-woven fabric according to claim 1, wherein the rubber resin is styrene butadiene rubber.

3. A textile for a non-woven fabric whose obverse surface side on which the non-woven fabric is conveyed is coated with a rubber resin classified into the M group of JISK6397 (polymethylene type rubber with a saturated main chain).

4. The textile for a non-woven fabric according to claim 3, wherein the rubber resin is acrylic rubber.

5. The textile for a non-woven fabric according to any one of claims 1 through 4, wherein the rubber resin is water soluble before curing.

6. The textile for a non-woven fabric according to any one of claims 1 through 5, wherein the static friction coefficient on the obverse surface side is in the range of 0.25 to 0.90.

7. A textile for a non-woven fabric, wherein
the obverse surface side on which the non-woven fabric is conveyed is coated with a resin different from the material of yarns that constitute the textile, and
the static friction coefficient on the obverse surface side is in the range of 0.25 to 0.90.

8. The textile for a non-woven fabric according to any one of claims 1 through 7, wherein cotton is pressed against a multilayer textile for a non-woven fabric whose obverse surface side on which the non-woven fabric is conveyed is tilted in the vertical direction, and the time between the release of the hand and the fall of the cotton is ten seconds or less.

9. The textile for a non-woven fabric according to any one of claims 1 through 8, wherein the difference between the height of a warp knuckle formed by a warp and the height of a weft knuckle formed by a weft on the obverse surface side on which the non-woven fabric is conveyed is 100 um or more.

10. The textile for a non-woven fabric according to any one of claims 1 through 9, wherein conductive yarns are interwoven.

11. The textile for a non-woven fabric according to claim 7, wherein the resin has a durometer hardness of 10 to 80 after curing.

12. A textile for a non-woven fabric whose obverse surface side on which the non-woven fabric is conveyed is coated with a resin having a durometer hardness of 10 to 80 after curing.

13. The textile for a non-woven fabric according to claim 12, wherein the durometer hardness is 50 to 80.

14. The textile for a non-woven fabric according to claim 12, wherein the durometer hardness is 10 to 20.

15. A conveying belt for spunbond non-woven fabrics, comprising the textile for a non-woven fabric according to any one of claims 1 through 14.
